(19) Europäisches Patentamt
European Patent Office
Office européen des brevets

(11) Publication number: **0 112 613 B1**

(12) **EUROPEAN PATENT SPECIFICATION**

(45) Date of publication of patent specification: **06.03.91** (51) Int. Cl.[5]: **C01B 3/38**

(21) Application number: **83305887.8**

(22) Date of filing: **29.09.83**

(54) **Process for producing hydrogen-rich gas from hydrocarbonaceous feeds.**

(30) Priority: **30.09.82 US 430147**
**30.09.82 US 430451**
**30.09.82 US 430320**
**30.09.82 US 430452**
**30.09.82 US 430200**

(43) Date of publication of application:
**04.07.84 Bulletin 84/27**

(45) Publication of the grant of the patent:
**06.03.91 Bulletin 91/10**

(84) Designated Contracting States:
**AT BE CH DE FR GB IT LI LU NL SE**

(56) References cited:
**DE-A- 1 417 796**
**FR-A- 1 490 005**
**US-A- 3 481 722**
**US-A- 4 053 556**
**US-A- 4 054 407**

**BRENNSTOFF-CHEMIE, vol. 46, no. 4, April 1965, pages 23-26; P. SCHMULDER: "Synthesegas durch autotherme, flammenlose, katalytische Spaltung von Benzinen"**

(73) Proprietor: **ENGELHARD CORPORATION**
**70 Wood Avenue South CN 770**
**Iselin New Jersey 08830(US)**

(72) Inventor: **Heck, Ronald M.**
**R.D. No. 2 Box 42**
**Frenchtown New Jersey(US)**
Inventor: **McShea III, William T.**
**774 Weemac Road**
**Martinsville New Jersey 08836(US)**
Inventor: **Buchanan, William**
**737 Marcellus Drive**
**Westfield New Jersey 07090(US)**
Inventor: **Flanagan, Paul**
**243 Davis Street**
**Northboro Massachusetts 01532(US)**
Inventor: **Yarrington, Robert M.**
**320 Wynchwood Road**
**Westfield New Jersey 07090(US)**

(74) Representative: **Colgan, Stephen James et al**
**CARPMAELS & RANSFORD 43 Bloomsbury Square**
**London WC1A 2RA(GB)**

**EP 0 112 613 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD OF THE INVENTION

The present invention relates to autothermal reforming and to processes utilizing the same, more specifically, to an autothermal process for the production of a hydrogen containing gas from a hydrocarbonaceous feed, e.g., a hydrocarbon feed, utilizing a catalytic partial oxidation process and, optionally, a steam reforming process. The present invention is well suited for utilization in a variety of processes including the production of an ammonia synthesis gas containing hydrogen and nitrogen in selected molar ratios and the utilization thereof for the production of ammonia; the production of a methanol synthesis gas containing hydrogen and carbon oxides in selected molar ratios and the utilization thereof for the production of methanol; the production of a synthetic natural gas from the coal-derived liquid hydrocarbon by-product resulting from the gasification of coal to produce gasifier synthetic natural gas; and to the conversion of natural gas or methane into a synthesis gas containing hydrogen and carbon oxides, and the utilization thereof for the synthesis of normally liquid hydrocarbons.

### BACKGROUND ART

Steam reforming is a well known method for generating hydrogen from light hydrocarbon feeds and is carried out by supplying heat to a mixture of steam and a hydrocarbon feed while contacting the mixture with a suitable catalyst, usually nickel. The steam reforming reaction may be represented as:

$$XH_2O + C_xH_y = XCO + (X + y/2)\ H_2$$

with the following equilibria tending to become established

$$CO + H_2O = CO_2 + H_2$$

$$CO + 3H_2 = CH_4 + H_2O$$

so that the overall reaction, which is endothermic, may be summarized as:

$$(X + 1)H_2O + C_XH_y = (X-1)\ CO + CO_2 + (X + y/2 + 1)\ H2$$

Steam reforming is generally limited to paraffinic naphtha and lighter feeds which have been de-sulfurized and treated to remove nitrogen compounds, because of difficulties in attempting to steam reform heavier hydrocarbons and the poisoning of steam reforming catalysts by sulfur and nitrogen compounds. Thus, economical methods have been needed to convert heavier feeds to hydrogen-rich gases which are suitable for steam reforming.

Another known method of obtaining hydrogen from a hydrocarbon feed is the partial oxidation process in which the feed is introduced into an oxidation zone maintained in a fuel rich mode so that only a portion of the feed is oxidized. The partial oxidation reaction may be represented as:

$$C_XH_y + \frac{X}{2} O_2 = XCO + \frac{y}{2} H_2$$

Steam may also be injected into the partial oxidation reactor vessel to react with the feed and with products of the partial oxidation reaction. The process is not catalytic and requires high temperatures to carry the reaction to completion, resulting in a relatively high oxygen consumption. On the other hand, the

partial oxidation process has the advantage that it is able to readily handle hydrocarbon liquids heavier than paraffinic naphthas and can even utilize coal as the source of the hydrocarbon feed.

Catalytic autothermal reforming of hydrocarbon liquids is also known in the art, as evidenced by a paper Catalytic Autothermal Reforming of Hydrocarbon Liquids by Maria Flytzani-Stephanopoulos and Gerald E. Voecks, presented at the American Institute of Chemical Engineers' 90th National Meeting, Houston, Texas, April 5-9, 1981. Autothermal reforming is defined therein as the utilization of catalytic partial oxidation in the presence of added steam, which is said to increase the hydrogen yield because of simultaneous (with the catalytic partial oxidation) steam reforming being attained. The paper discloses utilization of a particulate bed of nickel catalyst into which steam, air and a hydrocarbon fuel supply comprising a No. 2 fuel oil are injected to produce a gas containing hydrogen and carbon oxides.

In Brennstoff-Chemie 46 , No. 4, p. 23 (1965), a German publication, Von P. Schmulder describes a Badische Anilin and Soda Fabric (BASF) process for autothermal reforming of gasoline. The process utilizes a first, pelletized nickel catalyst zone. A portion of the product gas is recycled to the process.

Disclosure of the utilization of a noble metal catalyzed monolith to carry out a catalytic partial oxidation to convert more than half of the hydrocarbon feed stock upstream of a steam reforming zone is disclosed in an abstract entitled "Evaluation of Steam Reforming Catalysts for use in the Auto-Thermal Reforming of Hydrocarbon Feed Stocks" by R.M. Yarrington, I.R. Feins, and H.S. Hwang (National Fuel Cell Seminar, San Diego, July 14-16, 1980.) The paper noted the unique ability of rhodium to steam reform light olefins with little coke formation and noted that results were obtained for a series of platinum-rhodium catalysts with various ratios of platinum to total metal in which the total metal content was held constant.

U.S. Patent 4,054,407, assigned to the assignee of this application, discloses two-stage catalytic combustion using platinum group metal catalytic components dispersed on a monolithic body. At least the stoichiometric amount of air is supplied over the two stages and steam is not employed.

U.S. Patent 3,481,722, assigned to the assignee of this application, discloses a two-stage process for steam reforming normally liquid hydrocarbons using a platinum group metal catalyst in the first stage. Steam and hydrogen, the latter of which may be obtained by partially cracking the hydrocarbon feed, are combined with the feed to the process.

## SUMMARY OF THE INVENTION

In accordance with the present invention, there is provided a process for producing a hydrogen-rich gas by preheating an inlet stream comprising a hydrocarbonaceous feed, $H_2O$ and an oxygen-containing oxidant gas to a preheat temperature of, preferably, about 427° to 760° C, but in any case at least sufficiently high to initiate catalytic oxidation of the preferably hydrocarbonaceous feed and introducing the preheated inlet stream into a first catalyst zone (24a) to carry out catalytic partial oxidation therein. The process is characterized by the steps (a) - (c), as follows.

(a) The first catalyst zone comprises a monolithic body having a plurality of gas flow passages extending therethrough and having a catalytically effective amount of palladium and platinum catalytic components dispersed therein, and the amounts of hydrocarbonaceous feed, $H_2O$ and oxygen introduced into the first catalyst zone are controlled to maintain in the inlet stream an $H_2O$ to C ratio of at least about 0.5, preferably about 0.5 to 5, and an $O_2$ to C ratio of at least about 0.2, preferably about 0.2 to 0.8, but less than the stoichiometric amount of oxygen necessary to oxidize all the carbon of the feed to $CO_2$. (b) The preheated inlet stream is contacted within the first catalyst zone with the palladium and platinum catalytic component on the monolith to initiate and sustain therein catalytic oxidation of at least a sufficient quantity of the hydrocarbon feed to attain an elevated temperature within the first catalyst zone, which temperature is at least high enough to crack unoxidized $C_5$ or heavier hydrocarbons, if any be present, to light hydrocarbons not heavier than $C_4$ hydrocarbons, the temperature of at least a portion of the monolithic body being at least about 121° C higher than the ignition temperature of the inlet stream, whereby to produce a first catalyst zone effluent comprising, predominantly, hydrogen, carbon oxides and the aforesaid light hydrocarbons. (c) The first catalyst zone effluent is withdrawn as a hydrogen-rich gas.

One aspect of the invention is further characterized in that the hydrocarbonaceous feed is a hydrocarbon feed and the elevated temperature attained in step (b) is high enough to catalytically steam reform hydrocarbons remaining in said first catalyst zone effluent without necessity of supplying external heat thereto.

Other aspects of the invention are characterized by one or more of the following features: the first catalyst zone comprises palladium, platinum and, optionally, rhodium catalytic components distended upon a refractory metal oxide support layer carried on the monolithic body; a volumetric hourly rate of at least

100,000 volumes of throughput per volume of catalyst is maintained in the first catalyst zone; the first catalyst zone effluent, while it is at an elevated temperature, is passed from the first catalyst zone to a second catalyst zone containing a platinum group metal steam reforming catalyst therein and is contacted in the second catalyst zone with the steam reforming catalyst to react hydrocarbons in the first catalyst zone effluent with $H_2O$ to produce hydrogen and carbon oxides therefrom, and the effluent of the second catalyst zone (24b) is withdrawn as a hydrogen-rich gas; a volumetric hourly rate of about 2,000 to 20,000 volumes of throughput per volume of catalyst is maintained in the second catalyst zone; the process is carried out at a pressure of about atmospheric pressure up to 142 $kg/cm^2$; and the platinum group metal catalyst of the first catalyst zone comprises palladium, platinum and, optionally, rhodium catalytic components and the steam reforming catalyst of the second catalyst zone comprises platinum and rhodium.

Major aspects of the invention concern utilization of the hydrogen-rich synthesis gas for specific purposes and are further characterized as follows:

For the production of methanol, the effluent of the first catalyst zone, while still at an elevated temperature is passed to a second catalyst zone and contacted therein with a platinum group metal steam reforming catalyst to react hydrocarbons in the effluent with $H_2O$ to produce hydrogen and carbon oxides. The hydrogen-rich effluent of the second catalyst zone of the autothermal reformer may be cooled, and have sulfur-containing compounds and $H_2O$ removed therefrom, and may then be passed to a methanol synthesis loop to react the hydrogen with carbon oxides of the effluent over a methanol synthesis catalyst at methanol synthesis conditions, and methanol product withdrawn from the methanol synthesis loop. Oxygen is utilized as the oxidant gas and the hydrocarbonaceous feed is preferably a hydrocarbon feed. Advantageously, the preheat temperature of the inlet stream is about 427° to 760° C; the first catalyst zone is preferably maintained at a temperature of about 954° C to 1316° C and the first catalyst zone effluent is introduced into the second catalyst zone at substantially the same temperature. A volumetric hourly flow rate of at least 100,000 volumes of throughput per volume of catalyst is maintained in the first catalyst zone and a volumetric hourly rate of from about 2,000 to 20,000 volumes of throughput per volume of catalyst is preferably maintained in the second catalyst zone.

For the production of ammonia, the hydrogen rich effluent of the second catalyst zone of the autothermal reformer may have heat removed therefrom to cool the synthesis gas which is then passed to a reaction zone to react carbon monoxide therein with $H_2O$ to produce hydrogen. Sulfur containing compounds and $H_2O$ are removed from the synthesis gas which is then passed into an ammonia synthesis loop to react the hydrogen with nitrogen in the synthesis gas over an ammonia synthesis catalyst at ammonia synthesis conditions. Ammonia is then withdrawn as a product from the ammonia synthesis loop. The proportion of air to oxygen in the inlet stream is such as to provide oxygen enrichment of the air in the inlet stream to at least about 33, preferably about 33 to 50, volume percent oxygen and the hydrocarbonaceous feed is preferably a hydrocarbon feed. Advantageously, the preheat temperature of the inlet stream is from about 427° to 760° C; the first catalyst zone is preferably maintained at a temperature of from about 954° to 1316° C and the effluent from the first catalyst zone is introduced into the second catalyst zone at substantially the same temperature. The oxygen added to the synthesis gas is preferably added as air and the amount of added air is calculated to bring the nitrogen content of the synthesis gas to from about 2.9 to 3.1:1 molar ratio of hydrogen to nitrogen. Preferably, the amounts of feed, $H_2O$, air and oxygen introduced into the first catalyst zone are controlled to maintain in the inlet stream an $H_2O$ to C ratio of from about 1 to 4 and an $O_2$ to C ratio from about 0.5 to 0.6.

The production of a synthetic natural gas from coal gasification liquids is as follows. In coal gasification processes, coal is reacted with steam and oxygen to produce (i) a gasifier synthesis gas which is methanated to produce a synthetic natural gas and (ii) a liquid hydrocarbon by-product. A secondary synthesis gas is prepared from the liquid hydrocarbon by-product of (ii) by utilizing the latter as the hydrocarbonaceous feed and passing it, together with $H_2O$ and oxygen as the oxidant gas, to the first catalyst zone. The inlet stream is preheated to a temperature at least sufficiently high to initiate catalytic oxidation of the hydrocarbon by-product liquid, but less than about 649° C. Advantageously, an $H_2O$ to C ratio of from about 0.5 to 5 and an $O_2$ to C ratio from about 0.15 to 0.4 is maintained in the inlet stream. The preheat temperature is about 427° to 649° C and the first catalyst zone is maintained at a temperature of about 760° to 1093° C. The effluent of the first catalyst zone comprises primarily methane, hydrogen, carbon monoxide, carbon dioxide, $H_2O$ and $C_2$ to $C_4$ hydrocarbons. Carbon dioxide and water are removed from the effluent to provide a secondary synthesis gas which, together with the gasifier synthesis gas, is methanated to provide a product synthetic natural gas. Preferably, the first catalyst zone effluent,while still at an elevated temperature, is passed to a second catalyst zone which contains a steam reforming catalyst in which the first catalyst zone effluent is contacted with a steam reforming catalyst, to react hydrocarbons therein with $H_2O$ to produce hydrogen and carbon oxides therefrom, before passage to the treatment zone

as described above. Preferably, at least about 50% by weight of the hydrocarbon by-product liquid is converted to $C_1$ hydrocarbons in the first catalyst zone and at least about 98% by weight is so converted when both first and second catalyst zones are utilized.

For the production from a normally gaseous hydrocarbon feed, e.g., methane, of a synthesis gas and normally liquid hydrocarbons therefrom, oxygen is utilized as the oxidant gas. In such case, the hydrogen-rich effluent of the second catalyst zone is passed to a carbon dioxide removal zone and carbon dioxide is separated therein from the second catalyst zone effluent. The carbon dioxide-depleted effluent comprises the synthesis gas of the process. The carbon dioxide so separated is recycled to the inlet stream in an amount sufficient so that the inlet stream comprises from about 5 to 20 mole percent carbon dioxide. CO and $H_2$ in the synthesis gas are reacted to form hydrocarbons of different molecular weight, including normally liquid hydrocarbons, and the hydrocarbons are separated into product and by-product streams, and the latter are preferably recycled to the inlet stream. The preheat temperature is preferably about 427° to 760° C and the first catalyst zone is preferably maintained at a temperature of about 954° to 1316° C.

The catalytic partial oxidation aspect of the present invention provides a highly efficient method for producing hydrogen-rich gases from hydrocarbons, giving excellent yields in relatively compact and simple apparatus. The hydrogen-rich gases so produced are more suitable for steam reforming in a second catalyst zone as compared to the feed to the catalytic partial oxidation unit. The preferred combination of first and second catalyst zones provides a highly efficient and versatile process for obtaining hydrogen-rich synthesis gases.

## BRIEF DESCRIPTION OF THE DRAWINGS

Figure 1 is a schematic elevation view in cross section of a laboratory or pilot plant size embodiment of an autothermal reformer embodying a catalytic partial oxidation apparatus in accordance with the present invention;

Figure 2 is a flow sheet diagram of a plant illustrating one method of integrating the catalytic partial oxidation process of the present invention into an industrial plant for production of a hydrogen-rich gas;

Figure 3 is an enlarged schematic elevation view in cross section of a commercial plant sized embodiment of an autothermal reformer employing a catalytic partial oxidation apparatus in accordance with the invention suitable for use in the plant diagrammed in Figure 2;

Figure 3A is an enlarged, partial view of the catalytic partial oxidation portion of the apparatus of Figure 3;

Figure 4 is a schematic flow sheet diagram of a methanol synthesis plant including a synthesis gas making section in accordance with one embodiment of the present invention, the synthesis gas section including an autothermal reformer;

Figure 5 is a schematic flow sheet diagram of an ammonia synthesis plant, including a synthesis gas making section in accordance with one embodiment of the present invention, the synthesis gas section including an autothermal reformer;

Figure 6 is a schematic flow sheet diagram of coal gasification plant including an autothermal reforming section for converting liquid hydrocarbon by-product from the coal gasifier to secondary synthetic natural gas; and

Figure 7 is a schematic flow sheet diagram of a Fischer-Tropsch synthesis plant including an autothermal reforming section for converting normally gaseous hydrocarbons (and recycled hydrocarbons from the Fischer-Tropsch synthesis) to a hydrogen and carbon oxides synthesis gas.

## DESCRIPTION OF THE PREFERRED EMBODIMENTS OF THE INVENTION

In a preferred embodiment of the present invention, catalytic partial oxidation, an exothermic reaction, takes place in a catalyst monolith having platinum and palladium dispersed thereon to produce a gas which is rich in carbon monoxide and hydrogen. Some steam reforming appears to take place as well in the catalytic partial oxidation zone and thereby moderates somewhat the temperature attained in the monolith inasmuch as the endothermic steam reforming absorbs some of the heat generated by the partial oxidation step. The net reaction in the catalytic partial oxidation zone is, however, exothermic and the zone is therefore also referred to as an exothermic catalyst zone. The exothermic, catalytic partial oxidation zone comprises a monolithic catalyst carrier on which a platinum group metal catalyst is dispersed. Such catalyst can effectively catalyze the partial oxidation of, in addition to gaseous and lighter hydrocarbon liquids such

as natural gas or paraffinic naphtha, heavier hydrocarbon liquids such as diesel oil, number 2 fuel oil, and coal derived liquids. As compared to a non-catalytic combustion process such as conventional, non-catalytic partial oxidation, catalytic partial oxidation as described above enables the utilization of lesser amounts of oxygen and lower temperature levels to both oxidize a portion of the feed and crack heavier feedstocks, if any be present, to lighter hydrocarbon fractions, while raising the temperature of the reactant mass for subsequent treatment. Generally, at least about half the hydrocarbon feed stock is partially oxidized in the catalytic partial oxidation zone to produce primarily carbon monoxide and hydrogen, and heat which may be subsequently utilized for endothermic steam reforming. Substantially all of the oxygen introduced into the catalytic partial oxidation zone is consumed in the catalytic partial oxidation step. The oxygen may be provided by any suitable "oxygen-containing oxidant gas" which term is used in the claims to include air, air enriched with oxygen, oxygen or oxygen mixed with other gases. At the temperatures maintained in the catalytic oxidation zone, and in the presence of the product hydrogen and catalyst utilized in the first zone, a degree of hydrocracking of unoxidized $C_5$ and heavier hydrocarbon feed takes place to form $C_4$ and lighter compounds. The effluent gas from the catalytic partial oxidation zone contains primarily CO, $H_2$, $H_2O$, $N_2$, $C_2$ to $C_4$ and other lighter hydrocarbons, including olefins, and, depending upon the sulfur content of the feed stock, $H_2S$ and COS.

The combination of features provided by the present invention provides a highly efficient and flexible method of converting various types of hydrocarbonaceous feeds to a hydrogen-rich gas. For example, the combination of features provided by the catalytic partial oxidation process of the present invention provides a highly efficient process of manufacturing a synthesis gas by converting various types of hydrocarbonaceous feeds, including hydrocarbon feeds, to a hydrogen-rich gas which may also be rich in carbon oxides or in nitrogen. In addition to petroleum and coal derived hydrocarbons, biomass-derived feeds providing carbon-containing compounds such as methane, and/or hydrogen, oxygen and nitrogen in compounds or as elements, may be treated in accordance with the invention. Such hydrocarbonaceous feeds may, like hydrocarbon feeds, also contain sulfur or sulfur compounds. If the sulfur content of the feed is sufficiently high, the sulfur treatment zone as illustrated in Figure 2 will normally be required. If oxygen and/or nitrogen are present in the hydrocarbonaceous feed in appreciable amounts, they can provide at least a portion of the "air" for the process, and the atmospheric air or other oxidant gas introduced to the process can be reduced accordingly. The use of the monolithic palladium and platinum containing partial oxidation catalyst provides a great flexibility in handling diverse feedstocks, including heavy hydrocarbon feedstocks not normally suited for generating a hydrogen-containing synthesis gas.

The low pressure drop and high volumetric rate throughput of a monolithic body-supported catalyst provides a reduced size and volume of catalyst in the first catalyst zone. The use of platinum group metals as the catalytic metal facilitates a very low catalytic metal loading as compared to use of base metal catalyst. This provides good overall economies in reduced equipment size and enhanced throughput rates despite the much higher cost of platinum group metals as compared to base metals. The monolithic platinum palladium metal partial oxidation catalyst provides a great flexibility in handling diverse feedstocks and in producing a hydrogen-rich gas having characteristics designed for a specific purpose. Utilization of platinum group metal catalysts enables operation at relatively very low $H_2O$ to C and $O_2$ to C ratios without carbon deposition fouling the catalysts.

## The Monolithic Partial Oxidation Catalyst

The partial oxidation catalyst is provided on a monolithic carrier, that is, a carrier of the type comprising one or more monolithic bodies having a plurality of finely divided gas flow passages extending therethrough. Such monolithic carrier members are often referred to as "honeycomb" type carriers and are well known in the art. A preferred form of such carrier is made of a refractory, substantially inert rigid material which is capable of maintaining its shape and a sufficient degree of mechanical strength at high temperatures, for example, up to about 1,800 °C. Typically, a material is selected for the support which exhibits a low thermal coefficient of expansion, good thermal shock resistance and, though not always, low thermal conductivity. Two general types of material of construction for such carriers are known. One is a ceramic-like porous material comprised of one or more metal oxides, for example, alumina, alumina-silica, alumina-silica-titania, mullite, cordierite, zirconia, zirconia-spinal, zirconia-mullite, silicon carbide, etc. A particularly preferred and commercially available material of construction for operations below about 1,093 °C is cordierite, which is an alumina-magnesia-silica material. For applications involving operations above about 1,093 °C, an alumina-silica-titania material is preferred. Honeycomb monolithic supports are commercially available in various sizes and configurations. Typically, the monolithic carrier would comprise,

e.g., a cordierite member of generally cylindrical configuration (either round or oval in cross section) and having a plurality of parallel gas flow passages of regular polygonal cross section extending therethrough. The gas flow passages are typically sized to provide from about 7.75 to 186, preferably 31 to 93 gas flow channels per $cm^2$ (about 50 to 1,200, preferably 200 to 600, gas flow channels per square inch)of face area.

The second major type of preferred material of construction for the carrier is a heat- and oxidation-resistant metal, such as a stainless steel or the like. Monolithic supports are typically made from such materials by placing a flat and a corrugated metal sheet one over the other and rolling the stacked sheets into a tubular configuration about an axis parallel to the corrugations, to provide a cylindrical-shaped body having a plurality of fine, parallel gas flow passages extending therethrough. The sheets and corrugations are sized to provide the desired number of gas flow passages, which may range, typically, from about 7.75 to 186 per $cm^2$ (about 50 to 1,200 per square inch) of end face area of the tubular roll.

Although the ceramic-like metal oxide materials such as cordierite or alumina-silica-titania are somewhat porous and rough-textured, they nonetheless have a relatively low surface area with respect to catalyst support requirements and, of course, a stainless steel or other metal support is essentially smooth. Accordingly, a suitable high surface area refractory metal oxide support layer is deposited on the carrier to serve as a support upon which finely dispersed catalytic metal may be distended. As is known in the art, generally, oxides of one or more of the metals of Groups II, III, and IV of the Periodic Table of Elements having atomic numbers not greater than 40 are satisfactory as the support layer. Preferred high surface area support coatings are alumina, beryllia, zirconia, baria-alumina, magnesia, silica, and combinations of two or more of the foregoing.

The most preferred support coating is alumina, most preferably a stabilized, high-surface area transition alumina such as the gamma (preferred), chi, eta, kappa, theta and delta forms and mixtures thereof. One or more stabilizers such as rare earth metal oxides and/or alkaline earth metal oxides may be included in the transition alumina (usually in amounts comprising from 2 to 10 weight percent of the stabilized coating) to stabilize it against the generally undesirable high temperature phase transition to alpha alumina, which is of a relatively low surface area. For example, oxides of one or more of lanthanum, cerium, praseodymium, calcium, barium, strontium and magnesium may be used as a stabilizer. The specific combination of oxides of lanthanum and barium is a preferred stabilizer.

The catalytic partial oxidation catalyst may contain rhodium in addition to platinum and palladium. The platinum group metal may optionally be supplemented with one or more base metals, particularly base metals of Group VII and metals of Groups VB, VIB and VIIB of the Periodic Table of Elements. Preferably, one or more of chromium, copper, vanadium, cobalt, nickel and iron may be thus employed.

Desirable catalysts for partial oxidation should have the following properties: They should be able to operate effectively under conditions varying from oxidizing at the inlet to reducing at the exit; they should operate effectively and without significant temperature degradation over a temperature range of about 427° to 1315°C; they should operate effectively in the presence of carbon monoxide, olefins and sulfur compounds; they should provide for low levels of coking such as by preferentially catalyzing the reaction of carbon with $H_2O$ to form carbon monoxide and hydrogen thereby permitting only a low level of carbon on the catalyst surface; they must be able to resist poisoning from such common poisons as sulfur and halogen compounds; further, all of these requirements must be satisfied simultaneously. For example, in some otherwise suitable catalysts, carbon monoxide may be retained by the catalyst metal at low temperatures thereby decreasing or modifying its activity. The combination of platinum and palladium is a highly efficient oxidation catalyst for the purposes of the present invention. Generally, the catalytic activity of platinum-palladium combination catalyst is not simply an arithmetic combination of their respective catalytic activities; the disclosed range of proportions of platinum and palladium have been found to possess the previously described desirable qualities and in particular provide efficient and effective catalytic activity in treating a rather wide range of hydrocarbonaceous, particularly hydrocarbon, feeds with good resistance to high temperature operation and catalyst poisons.

The following data compare the effectiveness of palladium, rhodium and platinum, respectively, for the oxidation of methane and further compares the efficacy of, respectively, palladium-platinum, palladium-rhodium and platinum-rhodium combined catalysts for oxidation of methane.

The catalysts of Table I-A comprise lanthana-chromia-alumina frit impregnated with the platinum group metals by techniques as described above. The frit has the following composition:

| Component | Weight Percent |
|---|---|
| $La_2O_3$ | 3.8 |
| $Cr_2O_3$ | 1.8 |
| $Al_2O_3$ | 94.4 |

The lanthana-chromia stabilized alumina is then impregnated with the platinum group metal and calcined in air for four hours at 110 °C(230 °F) and for an additional four hours at 871 °C(1600 °F). Three catalysts of different platinum metal loadings were prepared as follows:

| Sample No. | Weight Percent Pd | Pt | Rh | Total PGM |
|---|---|---|---|---|
| 4063U-1 | 3.42 | 5.95 | - | 9.37 |
| 4063R-1 | 4.58 | - | 4.52 | 9.10 |
| 4063V-1 | - | 5.62 | 3.14 | 8.76 |

The resultant platinum group metal (PGM) impregnated alumina frit was deposited on alumina beads and the thus-coated beads were placed in a shallow bed and tested by passing a 1% (volume) methane 99% (volume) air feed at about atmospheric pressure through the catalyst. An electric heater was used to cyclically heat the test gas stream fed to the catalyst, and conversion results at the indicated temperatures were obtained on both the heating and cooling phases of each heat cycle.

The results are shown in the following Table I-A.

TABLE I-A

| Sample No. | PGM (Mole Ratio) | Ignition Temp. °F | Weight Percent of Original Methane Content Converted at Indicated Temperature °C (°F) 316° (600° | 371° 700° | 426° 800° | 482° 900° | 538° 1000° | 593° 1100°) |
|---|---|---|---|---|---|---|---|---|
| 4063U-1 | Pd;Pt(1:1) | 610 | - | 3 | 10 | 26 | 60 | 80 |
| 4063R-1 | Pd;Rh(1:1) | 710 | - | - | 2 | 5 | 9 | 12 |
| 4063V-1 | Pt;Rh(1:1) | 730 | - | - | 1 | 1 | 3 | 5 |

These data demonstrate the ability of platinum palladium catalyst to promote catalytic oxidation of methane over a wide range of temperatures.

Rhodium may optionally be included with the platinum and palladium. The combined platinum group metal catalysts of the invention also have a significant advantage in the ability to catalyze the reactions at quite low ratios of $H_2O$ to carbon (atoms of carbon in the feed) and oxygen to carbon, without significant carbon deposition on the catalyst. This important feature provides flexibility in selecting $H_2O$ to C and $O_2$ to C ratios in the inlet streams to be processed.

The platinum group metals employed in the catalysts of the present invention may be present in the catalyst composition in any suitable form, such as the elemental metals, as alloys or intermetallic compounds with the other platinum group metal or metals present, or as compounds with the other platinum group metal or metals present, or as compounds such as an oxide of the platinum group metal. As used in the claims, the terms palladium, platinum and/or rhodium "catalytic component" or "catalytic components" is intended to embrace the specified platinum group metal or metals present in any suitable form. Generally, reference in the claims or herein to platinum group metal or metals catalytic component or components embraces one or more platinum group metals in any suitable catalytic form. Table I-A demonstrates that the palladium-rhodium and platinum-rhodium combinations are rather ineffective for

methane oxidation. The effectiveness of rhodium as a methane oxidation catalyst is attenuated by the relatively high calcination temperature of 871 °C(1600 °F). At a lower calcination temperature used in preparation of the catalyst, say 593 °C(1100 °F), rhodium retains good methane oxidation characteristics. However, the catalytic partial oxidation catalyst of the present invention may operate at ranges well above 593 °C(1100 °F), which would probably also reduce the effectiveness of rhodium for methane oxidation.

The tests in which the results of Table I-A were developed used a bed of the platinum group metal-impregnated frit dispersed on alumina beads, rather than a monolithic body on which the frit is dispersed. The bed of frit-coated beads was of shallow depth to avoid excessive pressure drop. The geometric configuration of a 62 cell/$cm^2$ (400 cell/ $in^2$)monolithic body provides more geometric surface area exposed to the reactant gas than does a bed of coated beads. The catalytic partial oxidation reactions of this invention are extremely rapid at the temperatures involved. Therefore, the catalytic metals on the surface of the catalyst body are predominantly involved in the reactions. The results of the tests with coated beads are indicative of results with monolithic bodies, but lower catalytic metal loading can be used with the latter as compared to metal loadings on beads, to attain equivalent results.

Table I-B shows the results of testing a monolithic body-supported catalyst on which a ceria-stabilized alumina frit impregnated with the indicated platinum group metals was dispersed upon a monolithic support. The alumina frit comprised 5% by weight $CeO_2$, balance $Al_2O_3$, impregnated with one or two platinum group metals to provide the loadings indicated in Table I-B. The catalyst was calcined in air at 500 °C for two hours and then was aged 24 hours at 982 °C(1800 °F) in air.

Two different test gases, A and B, having the following compositions were passed through the catalyst:

| COMPOSITION | PARTS PER MILLION (VOL) OR VOLUME PER CENT | |
|---|---|---|
| | A | B |
| $O_2$ | 3% | 3% |
| CO | 1% | 1% |
| $CO_2$ | 10% | 10% |
| $H_2O$ | 10% | 10% |
| NO | 500ppm | 500ppm |
| $C_2H_4$ | 300ppm | - |
| $C_3H_8$ | - | 300ppm |
| $N_2$ | balance | balance |

Table I-B indicates the temperature in degrees centigrade necessary for conversion of 50% by weight of the original amount of the component present, indicated under the column heading $T_{50}$, and the temperature required for 75% by weight conversion, under the heading $T_{75}$. A lower temperature accordingly indicates a more active catalyst. The results obtained are as follows; the platinum group metal (PGM) loading on the monolithic support is shown as grams of platinum group metal per cubic inch of monolithic catalyst.

## TABLE I-B

| Catalyst Sample No. | PGM Weight Ratio Pt:Pd | PGM Loading Pt/pd mg/cm$^3$ (g/in$^3$) | Total PGM Loading mg/cm$^3$ (g/in$^3$) |
|---|---|---|---|
| 1. | 100:00 | 31 (0.51/-) | 3.1 (.051) |
| 2. | 82:18 | 2.6/0.6 (.044/.010) | 3.3 (.054) |
| 3. | 58:42 | 1.6/1.2 (.027/.019) | 2.8 (.046) |
| 4. | 25:75 | 0.7/1.9 (.011/.031) | 2.6 (.042) |
| 5. | 0:100 | -/2.4 (-/.039) | 2.4 (.039) |
| 6. | 11:89 | 0.2/1.5 (.003/..025) | 1.7 (.028) |
| 7. | 100:0 | 2.1/- (.035/-) | 2.1 (.035) |
| 8. | 70:30 | 2.1/0.8 (.034/.014) | 2.9 (.048) |

| | Test Gas A | | | | Test Gas B | | | |
|---|---|---|---|---|---|---|---|---|
| Component | CO | | $C_2H_4$ | | CO | | $C_3H_8$ | |
| Percent Conversion | $T_{50}$ | $T_{75}$ | $T_{50}$ | $T_{75}$ | $T_{50}$ | $T_{75}$ | $T_{50}$ | $T_{75}$ |
| Catalyst Sample No. | °C | | °C | | °C | | °C | |
| 1. | 325 | 335 | 325 | 335 | 265 | 275 | 470 | 565 |
| 2. | 270 | 275 | 280 | 290 | 280 | 285 | 545 | 615 |
| 3. | 235 | 250 | 260 | 305 | 260 | 265 | 495 | 640 |
| 4. | 235 | 245 | 260 | 320 | 260 | 270 | 465 | 585 |
| 5. | 230 | 235 | 245 | 270 | 245 | 255 | 440 | 510 |
| 6. | 270 | 275 | 275 | 315 | 245 | 255 | 430 | 555 |
| 7. | 345 | 355 | 350 | 365 | 320 | 330 | 495 | 550 |
| 8. | 255 | 265 | 265 | 290 | 245 | 250 | 485 | 585 |

The data of Table I-B demonstrates the lower temperatures at which a palladium containing catalyst will attain, respectively, 50% and 75% conversion of ethylene as compared to a platinum only catalyst. As mentioned above, the presence of platinum in addition to palladium provides effective catalyzation of other species as well as providing enhanced poison resistance.

An exemplary mode of preparation of partial oxidation catalyst compositions utilizable in accordance with the present invention is set forth in the following Example 1.

Example 1

(a) To 229g of 5 wt % $CeO_2$ - 95 wt % $Al_2O_3$ powder (a predominantly gamma alumina which has been stabilized by incorporation of ceria therein) is added a solution containing 21g Pt as $H_2Pt(OH)_6$ solubilized in monoethanolamine so as to give total volume of 229 ml. After mixing for 5 minutes, 25 ml of glacial acetic acid is added and the material is mixed an additional 5 minutes before being dried and then calcined for one and one-half hours at 350° C in air to form a free flowing powder.

(b) Similarly,to 229g of 5 wt % $CeO_2$ - 95 wt % $Al_2O_3$ powder there is added 21g Pd as $Pd(NO_3)_3$. The material is mixed and reduced with 16 ml of $N_2H_4 \cdot H_2O$ solution with constant mixing. The impregnated powder is dried and then calcined for one and one-half hours at 375° C in air.

(c) Two hundred grams of each of powder (a) and (b) is added to a 1.9 litre (1/2 gallon) size ball mill with an appropriate amount of grinding media. To the powder is added 20 ml of glacial acetic acid and 550 ml of $H_2O$. The sample is ball milled for 16 hours. The resulting slurry has a solids content of 43%, a pH of 4.0 and a viscosity of 337 mPas(cps) and is used to coat a Corning cordierite monolith having a diameter of 9.3cm(3.66"), a length of 7.62cm(3")and 62 gas flow passages (of square cross section) per square centimeter of end face area 400/sq in.). The coating is accomplished by dipping the monolith in the slurry for 2 minutes, draining excess slurry and blowing the excess slurry from the gas flow passages with high pressure air. The resultant slurry-coated monolith is dried at 110° C and calcined at 500° C in air for 30 minutes. The finished catalyst body contains 8.4mg of platinum group metal per $cm^3$ of catalyst body volume (238g/cubic foot) at a weight ratio of platinum to palladium of 1:1, with the platinum group metal dispersed on a ceria-stabilized alumina "washcoat" support layer. The catalyst body contains 85.4mg/$cm^3$-(1.4 grams per cubic inch) of catalyst body of stabilized alumina washcoat.

A series of partial oxidation catalyst compositions utilizable in accordance with the present invention were prepared by substantially the procedure described in Example 1, with appropriate modifications to obtain the reported loadings of different catalyst metals. Each of the below described materials is a monolithic catalyst composition. Except for the catalyst identified as CPO-5, in each case the honeycomb carrier is a C-400 cordierite carrier (62 gas flow passage per square centimeter (400 per square inch) of end face area) manufactured by Corning. The CPO-5 catalyst is on an alpha alumina monolith body, sold under the trademark TORVEX by DuPont, and having 9.9 gas flow channels per square centimeter (64 per square inch) of end face area. The Corning cordierite monoliths have gas flow channels which are square in cross section; those of the TORVEX monolith are hexagonal in cross section. The amount of platinum group metal on the catalyst is given in grams of elemental platinum group metal per cubic foot of monolith catalyst. The weight ratio of the platinum group metals in the order listed is given in parentheses. Thus, catalyst CPO-1 in Table 1, for example, contains platinum and palladium in a weight ratio of one part platinum to one part palladium. In each case, the refractory metal oxide coating is alumina, predominantly comprising gamma alumina stabilized as indicated, the respective weight percents of stabilizer being indicated, the balance comprising substantially alumina.

TABLE I

| Catalyst | PG Metal Component | PG Metal mg/cm3 (g/ft3) | Weight % and Stabilizer in Support Coating | Alumina Support coating mg/cm3 (g/in3) (% Stabilizer) |
|---|---|---|---|---|
| CPO-1 | Pt,Pd(1:1) | 7.7 (215) | 5% ceria | 77.5 (1.27) |
| CPO-2 | Pt,Pd(1:1) | 6.6 (186) | 5% ceria | 100 (1.64) |
| CPO-3 | Pt,Pd(1:4) | 9.7 (275) | 5% ceria | 109 (1.79) |
| CPO-4 | Pt,Pd(1:0 | 10.9 (310) | 5% ceria | 142 (2.32) |
| CPO-5(*) | Pt,Pd(1:1) | 7.1 (200) | 5% ceria | 76.9 (1.26) |
| CPO-6 | Pt,Pd,Rh (9.5:9.5:1) | 8.1 (230) | 5% ceria | 89.7 (1.47) |
| CPO-7 | Pt,Pd(1:1) | 6.6 (186) | 2.5% lanthana 2.5% baria | 100 (1.64) |

(*) TORVEX alpha alumina monolith; all others are cordierite monoliths.

Preferred catalyst metals are platinum and palladium and combinations thereof, preferably, combinations comprising about 10-90% by weight palladium, preferably 25-75%, more preferably 40 to 60%, by weight palladium, and about 90 to 10% by weight platinum, preferably 75 to 25%, more preferably 60 to 40%, by weight platinum. Generally, as the sulfur content of the hydrocarbon feed being treated increases, a higher proportion of platinum to palladium is preferred. On the other hand, for feeds which have a relatively high methane content, an increasing proportion of palladium is preferred.

The monolithic configuration of the partial oxidation catalyst affords a relatively low pressure drop across it as compared to the packed bed of a particulate support catalyst. This is particularly important in view of the increase in gas volume occasioned by the reactions taking place in the first catalyst zone. The total moles of product produced in the monolith is higher than the total moles of $H_2O$, oxidant gas and hydrocarbon feed introduced therein. The individual gas flow passages of the monolith also serve, in effect, as individual adiabatic chambers, thus helping to reduce heat loss and promote hydrocracking. This is particularly so when the monolith carrier comprises a ceramic-like material such as cordierite which has generally better heat insulating properties than do the metal substrates and, to this extent, the ceramic-type monolithic carriers are preferred over the metal substrate monolithic carriers. Further, as the monolith body becomes heated during operation, the gas in the upstream portion of the monolith is preheated by the heat which is transferred back from the downstream catalytic partial oxidation to the inlet portion of the monolith, thus facilitating desired hydrocracking and oxidation reactions.

Steam Reforming Catalyst

The steam reforming catalyst which is optionally utilized in the second catalyst zone in accordance with the present invention, may utilize a monolithic carrier as described above in connection with the partial oxidation catalyst or it may comprise a particulate support such as spheres, extrudates, granules, shaped members (such as rings or saddles) or the like. As used herein and in the claims, the term "particulate catalyst" or the like means catalysts of regularly or irregularly shaped particles or shaped members or combinations thereof. A preferred particulate support is alumina pellets or extrudate having a BET (Brunnauer-Emmet-Teller) surface area of from about 10 to 200 square meters per gram. Alumina or alumina stabilized with rare earth metal and/or alkaline earth metal oxides as described above, may be utilized as the pellets or extrudate. An alumina particulate support stabilized with lanthanum and barium

oxides as described above is preferred.

The catalytically active metals for the steam reforming catalyst may comprise any of the catalytic metals known for such purpose, for example, nickel, cobalt and mixtures thereof are well suited for use as steam reforming catalysts. Platinum group metals such as platinum and rhodium or both may also be utilized for steam reforming, as is known in the art. A preferred platinum group metal steam reforming catalyst is a combination of platinum plus rhodium with the rhodium comprising from about 10 to 90% by weight, preferably 20 to 40% by weight, of total platinum group metal present and the platinum comprising 90 to 10%, preferably 80 to 60%. The proportion of platinum and rhodium utilized will depend on the type of hydrocarbon feed to be treated in the process. Other platinum group metals may also be utilized. For example, as disclosed in U.S. Patent 3,481,722, assigned to the assignee of this application, one or more of platinum, palladium, rhodium, iridium, osmium and ruthenium may be utilized as the steam reforming catalyst.

Steam reforming catalysts which are useful in conjunction with the catalytic partial oxidation process of the present invention may be prepared as set forth in the following Example 2.

Example 2

(a) A barium nitrate solution is prepared by dissolving 159.9g $Ba(NO_3)_2$ in 1,650 ml of $H_2O$. Lanthanum nitrate, in the amount of 264.9g $La(NO_3)_2 \cdot 6H_2O$ is dissolved in the barium nitrate solution by mixing vigorously to yield a barium-lanthanum solution, to which is added 3,000g of high surface area gamma alumina powder. The solution and powder are thoroughly mixed in a sigma blade mixer for 30 minutes.

(b) The impregnated alumina resulting from step (a) was extruded through 1.6mm(1/16")diameter dies so as to give 1.6mm(1/16") diameter extrudate in lengths from 6.35mm(1/4") to 9.5mm(3/8")

(c) The extrudates from step (b) were dried at 110°C for 16 hours and then calcined 2 hours at 1,050° in air.

(d) A platinum-rhodium solution was prepared by dissolving 42.0g Pt as $H_2Pt\ (OH)_6$ in monoethanolamine and 18.0g Rh as $Rh\ (NO_3) \cdot 2H_2O$ and combining the materials in $H_2O$ to provide a solution having a volume of 1,186 ml and a pH of 0.7 after adjustment with concentrated $HNO_3$.

(e) The platinum-rhodium solution of step (d) is added to the extrudate obtained in step (c) in a tumbling coater mixed for 30 minutes. The impregnated extrudate is dried at 120°C for 4 hours and then calcined for 30 minutes at 500°C in air.

The resultant particulate steam reforming catalyst, designated SR-1, comprises 1.4 wt % platinum and 0.6 wt % rhodium on a $La_2O_3$ - BaO stabilized gamma alumina extrudate.

Preferred embodiments of the partial catalytic oxidation apparatus of the present invention are described in some detail below.

The Reactor Vessel

Preferably, the reactor utilized in the process of the invention comprises a fixed bed, adiabatic reactor. Figure 1 shows a somewhat schematic rendition of a preferred laboratory or pilot plant size reactor comprising a unitary vessel 1 within which a monolithic carrier partial oxidation catalyst 2 is disposed in flow communication via a passageway 3 with a bed of steam reforming catalyst 4. The vessel is suitably insulated by thermal insulating material 5 to reduce heat losses and to provide essentially a fixed bed, adiabatic reactor. Inlet lines 6, 7 and 8 feed a mixer 9 with, respectively, a hydrocarbon feed, steam and oxygen. The latter may be introduced as an oxygen containing gas, preferably air. The admixed reactants are introduced through an inlet line A into partial oxidation catalyst 2, thence via passage 3 into steam reforming bed 4 from which the contacted material is withdrawn through outlet line B. Valves, flow meters and heat exchange units, utilized in a manner known to those skilled in the art, are not shown in the schematic illustration of Figure 1.

In order to exemplify the suitability of the present catalytic partial oxidation process for producing a feed gas which may be readily steam reformed, test runs were carried out in an apparatus substantially in accordance with that schematically illustrated in Figure 1, in which the monolithic carrier catalyst 2 was of cylindrical configuration 1.9cm(three quarters of an inch) in diameter and 22.9cm (nine inches) long. The steam reforming bed was a cylindrical bed of particulate catalyst 7.62cm(three inches) in diameter by 23.5cm(nine and a quarter inches) long. The following test runs were carried out and the indicated results obtained. In operation, the reactants were preheated with the oxidant stream being preheated separately

from the hydrocarbon feed as a safety measure. After preheating, the streams were intimately mixed and immediately fed into the partial oxidation catalyst 2 of vessel 1. Generally, all the oxygen present in the feed reacts within monolithic catalyst bed 2 to oxidize a portion, but not all, of the hydrocarbon feed, resulting in an increase in temperature due to the exothermic oxidation reaction. At least some of the $C_5$ and heavier hydrocarbon is hydrocracked in catalyst bed 2 to lighter, $C_1$ to $C_4$ hydrocarbon fractions. The heated, partially oxidized and hydrocracked effluent from catalyst bed 2 is then passed through steam reforming catalyst bed 4 wherein the steam reforming reaction takes place. The product gases withdrawn via outlet B are cooled and unreacted water as well as any unreacted hydrocarbon feed is condensed and removed therefrom. The dry gas composition was monitored by gas chromatography. A series of test runs was conducted as shown by the numbered Examples below.

Referring now to Figure 2, there is shown a schematic illustration of an autothermal reforming plant utilized to provide a hydrogen-rich gas from a hydrocarbon feed. A source of a hydrocarbon feed, e.g., No. 2 fuel oil, a coal derived liquid, JP-4, or a lighter feed such as a paraffinic naphtha, is passed via a line 10 through a heater 12 for preheating, and is passed thence to a mixer 14 for admixture with air and steam as described below. Heater 12 is supplied with air and a suitable fuel through, respectively, lines 13 and 15, and fuel gas is withdrawn via stack line 17. Air is introduced via a line 16 which also passes through heater 12 for preheating and is passed thence to mixer 14. Water, which may be preheated in heater 12, is introduced via line 18 into heat exchanger 20 wherein it is heated by heat exchange with the effluent emerging from the autothermal reformer 24, as described below. Superheated steam is generated in heat exchanger 20 and passed via steam line 22 into mixer 14. The heated mixture of air, steam and hydrocarbon feed obtained in mixer 14 is introduced into autothermal reformer 24. Heater 12 may be omitted if sufficient heat is available in the superheated steam to provide the sensible heat to the air and hydrocarbon streams.

In reformer 24 the mixture of fuel, steam and air is passed initially through a catalytic partial oxidation catalyst supported on a monolithic honeycomb carrier disposed within neck portion 24a of a reformer 24. Some, preferably at least one half by weight, but not all of the hydrocarbon feed is catalytically oxidized within the first catalyst zone contained within neck portion 24a and any $C_5$ or heavier unoxidized hydrocarbons are hydrocracked to lighter constituents, $C_1$ to $C_4$ hydrocarbons, including olefins. The effluent from the first catalyst zone may then be passed into a second, steam reforming catalyst zone contained within main body portion 24b of reformer 24, to convert residual hydrocarbons to hydrogen and carbon oxides.

Referring to Figure 3, a schematic enlarged cross sectional view of reformer 24 shows that it comprises a steel pressure vessel 21 which has thermal insulation 23 affixed on the interior surfaces thereof to reduce heat losses from vessel 21. An inlet opening 25 is positioned at the upstream end of neck portion 24a, i.e., the end opposite the downstream end of neck 24a. ("Upstream" and "downstream" as used herein and in the claims is used as sensed with reference to the general direction of gas flow through the reformer unit.) A monolithic catalyst 27, having its gas flow passages oriented vertically, as shown in Figure 3A, is mounted within neck 24a by means comprising a circular flange 29 (see Figure 3A) welded or otherwise affixed within neck portion 24a.

A bed 31 of particulate steam reforming catalyst is supported by means comprising a screen 33 (which may comprise a foraminous plate) welded or otherwise affixed to, or supported within, the interior of main body portion 24b. A supporting flange (not shown) may be affixed to the interior of body portion 24 to support screen 33 in a removable manner within body portion 24. Cross bars (not shown) may serve to strengthen screen 33. An outlet opening 35 is provided in main body portion 24b, downstream of catalyst bed 31.

The respective diameters of monolithic catalyst 27 and catalyst bed 31 are approximately those of the inside diameter of, respectively, portions 24a and 24b of reformer 24 so that substantially all the gas flow (indicated in Figure 3 by the unmarked arrows) through reformer 24b is constrained to pass through both catalyst beds. The following Examples demonstrate that the catalytic partial oxidation process of the present invention produces gases which are suited to steam reforming to produce hydrogen-rich gases.

Example 3

(a) A monolithic partial oxidation catalyst made in accordance with Example 1 has the following composition: 6.6mg of platinum group metal (PGM) per cubic centimeter (186 grams per cubic foot) of catalyst volume, the PGM comprising platinum and palladium in a 1:1 weight ratio. The PGM is distended upon a lanthana-baria stabilized predominantly gamma alumina washcoat dispersed on a

Corning cordierite monolith 1.9 cm in diameter and 22.9 cm in length, and having 62 gas flow passages per square centimeter (400 per square inch) of end face area. The monolith is loaded with 0.1g of washcoat per cubic centimeter (1.64g per cubic inch) of catalyst volume.

(b) A steam reforming catalyst is provided by 1,075 ml of catalyst SR-1 of Example 2, in a packed bed measuring 7.62 cm in diameter and 23.5 cm in depth.

(c) The hydrocarbon feed is a No. 2 fuel oil having the following properties:

API Gravity: 34.7

Distillation Range: 374-664°F

Sulfur Content: 1,200 parts per million (weight)

Hydrocarbon classes per ASTM D1319:

Aromatics: 22.0%

Olefins: 5.7%

Saturates: 72.3%

(d) The reactor vessel is a fixed bed, adiabatic reactor of the type schematically illustrated in Figure 1. For safety considerations, the oxidant stream, comprising air, is preheated separately from the hydrocarbon stream in a preheater (not shown in Figure 1). The steam is separated into two streams, one of which is blended with the oxidant steam and one with the hydrocarbon feed. The preheated streams are intimately mixed within a mixer, schematically illustrated at 9 in Figure 1, and immediately fed to the partial oxidation catalyst. The partial oxidation catalyst (2 in Figure 1) in the first catalyst zone contains the monolithic catalyst of (a), above, and the steam reforming catalyst (4 in Figure 1) in the second catalyst zone contains the SR-1 catalyst of (b), above.

The amounts of steam, air and hydrocarbon feed introduced to the process are controlled to provide a molar ratio of $H_2O$ to C of 2.56 and a molar ratio of $O_2$ to C of 0.41. All of the limited amount of oxygen contained in the inlet feed is completely reacted and a sufficient amount of the hydrocarbon is oxidized to heat the reactant mass by the exothermic catalytic oxidation reaction to a temperature high enough for steam reforming. The effluent from the catalytic partial oxidaticn catalyst 2 is immediately flowed into the steam reforming catalyst 4 and then withdrawn via the outlet opening as indicated by the arrow B in Figure 1.

The product gas is cooled and unreacted water (and unreacted hydrocarbon oil) is condensed therefrom. The dry gas composition is monitored by gas chromatography and the following results were measured and the results tabulated in Table II.

TABLE II

A. Effluent Composition and Hydrocarbon Conversion

| Constituents of Dried Product Gas | Dried Product Gas Composition, Mole % As Measured | $N_2$ Free Basis |
|---|---|---|
| $H_2$ | 39.6 | 63.3 |
| CO | 8.7 | 13.9 |
| $CO_2$ | 14.2 | 22.7 |
| $N_2$ | 37.4 | - |
| $CH_4$ | 0.06 | 0.1 |
| $C_2H_6$ | 0 | 0 |
| $C_2H_4$ | 0 | 0 |
| Hydrocarbon Conversion | 99.7%(*) | 99.7%(*) |

(*) weight percent of quantity of hydrocarbon feed to the reactor.

B. Throughput and Temperatures

Volumetric throughput rate, volumes of throughput at standard temperature and pressure per volume of catalyst per hour:

| | | |
|---|---|---|
| monolithic partial oxidation catalyst (item 2 in Fig. 1) | = | 126,000 |
| particulate steam reforming catalyst (item 4 in Fig. 1) | = | 6,500 |
| Interstage temperature (between items 2 and 4 of Fig. 1) | | 861°C |
| Preheat Temperature (line A of Fig. 1) | | 690°C |
| Exit Temperature (line B of Fig. 1) | | 733°C |

In each of the Examples 3-7, identical operating conditions were employed, except as specifically otherwise indicated, to autothermally reform a hydrocarbon feed.

The following Example 4 demonstrates that the effluent from the catalytic partial oxidation process of the present invention is also suited to steam reforming using a commercially available nickel steam reforming catalyst.

Example 4

The same hydrocarbon feed as employed in Example 3 was utilized, and the following steam reforming catalyst, commercially available from United Catalysts, Inc. under the designation G9OC, was substituted for the steam reforming catalyst of paragraph (b) of Example 3.

G90C Catalyst

| Composition: | | Properties: |
| --- | --- | --- |
| Ni | 15.4 weight % | Surface area: 16.2 $m^2/g$ |
| Ca | 0.21 weight % | Compacted bulk density: 1.2 g/ml |
| $Al_2O_3$ | balance | Total porosity (Hg): 0.215 ml/g |
| | | Tablet shape, measuring 0.32 cm by 0.32 cm |

The molar ratio of $H_2O$ to C was 2.59 and the molar ratio of $O_2$ to C was 0.41. The results tabulated in Table III were attained.

TABLE III

| Constituents of Dried Product Gas | Dried Product Gas Composition, Mole % As Measured | $N_2$ Free Basis |
| --- | --- | --- |
| $H_2$ | 34.5 | 58.8 |
| CO | 11.5 | 19.6 |
| $CO_2$ | 11.9 | 20.3 |
| $N_2$ | 41.3 | - |
| $CH_4$ | 0.75 | 1.28 |
| $C_2H_6$ | 0.01 | 0.02 |
| $C_2H_4$ | 0.01 | 0.02 |
| Hydrocarbon Conversion | 96.7%(*) | 96.7%(*) |

(*) weight percent of quantity of hydrocarbon feed to the reactor.

B. Throughput and Temperatures

| | | |
|---|---|---|
| Volumetric throughput rate, volumes of throughput at standard temperature and pressure per volume of catalyst per hour: | | |
| monolithic partial oxidation catalyst (item 2 in Fig. 1) | = | 126,000 |
| particulate steam reforming catalyst (item 4 in Fig. 1) | = | 6,500 |
| Interstage temperature (between items 2 and 4 of Fig. 1) | | 997°C |
| Preheat Temperature (line A of Fig. 1) | | 690°C |
| Exit Temperature (line B of Fig. 1) | | 793°C |

A comparison of the results of Table II with those of Table III shows that the catalytic partial oxidation process also provides an effluent which is well suited for steam reforming using nickel catalyst even though the nickel catalyst in the steam reforming section is not as effective for converting the effluent from the catalytic partial oxidation of No. 2 fuel oil. As indicated by the results in Table II, when the platinum-rhodium steam reforming catalyst was used, nearly 100% conversion of No. 2 fuel oil was attained, as compared to 96.7% when the nickel catalyst was used in accordance with the invention. Also, although not reported in the Tables, when the nickel catalyst was employed, a rapid increase in reactor pressure drop was observed. This could have been due to soot accumulation on the nickel steam reforming catalyst. The platinum group metal catalysts were able to operate much closer to the theoretical soot line with respect to $H_2O$ to C and $O_2$ to C ratios, without significant soot deposition. It appears that the platinum group metal catalysts may catalyze a carbon oxidation reaction which (such as the steam/carbon reaction) prevents or at least limits soot accumulation on the catalyst.

The following Example illustrates the separate use of the catalytic partial oxidation process of the present invention.

Example 5

The procedure of Example 3 was repeated except that the composition of the effluent from the catalytic partial oxidation monolith was determined directly, without being passed through a steam reforming catalyst.

TABLE IV

| Constituents of Dried Product Gas | Dried Product Gas Composition, Mole % As Measured | $N_2$ Free Basis |
|---|---|---|
| $H_2$ | 26.82 | 50.38 |
| CO | 21.08 | 39.59 |
| $CO_2$ | 3.95 | 7.42 |
| $N_2$ | 46.76 | - |
| $CH_4$ | 0.95 | 1.78 |
| $C_2H_6$ | 0.04 | 0.08 |
| $C_2H_4$ | 0.31 | 0.58 |
| $C_3H_6$ | 0.08 | 0.15 |
| $C_4=$ | 0.01 | 0.02 |
| Hydrocarbon Conversion | 85%(*) | 85%(*) |

(*)weight percent of quantity of hydrocarbon feed to the reactor.

B. Throughput and Temperatures

| | |
|---|---|
| Volumetric throughput rate, volumes of throughput at standard temperature and pressure per volume of catalyst per hour: | |
| monolithic partial oxidation catalyst (item 2 in Fig. 1) | = 126,000 |
| particulate steam reforming catalyst (item 4 in Fig. 1) | NOT APPLICABLE |
| Preheat Temperature (line A of Fig. 1) | 690°C |
| Exit Temperature (line B of Fig. 1) | 861°C |

As indicated by the results tabulated in Table IV, only about 15% of the original feed stock is unconverted, approximately 85% by weight of the original hydrocarbon feed being oxidized (and/or steam reformed and cracked) in the catalytic partial oxidation zone. The effluent is high in olefin content, and contained $H_2S$ and COS as well as the most refractory portions of the hydrocarbon feed. Thus, it can be appreciated that the catalytic partial oxidation process of the present invention is capable of forming an effluent which is capable of being steam reformed from No. 2 fuel oil.

The suitability of the catalytic partial oxidation process of the present invention for use with a wide variety of steam reforming catalysts is well illustrated in Table V by the data set forth below. Table V gives the compositions of a number of reforming catalysts. The catalysts were used to steam reform the effluent obtained from a catalytic partial oxidation unit. Table VI shows the amount of conversion of the hydrocarbon feed and the type of hydrocarbon left unreacted. A value of zero under the heading "Unreacted HC Type" means 100% conversion of the hydrocarbon type specified. Thus, the composition of the effluent obtained from the first (catalytic partial oxidation) catalyst zone should be taken into consideration in selecting the specific platinum group metals utilized in the steam reforming catalyst. Platinum group metal steam reforming catalysts are not always required for the steam reforming catalyst used in accordance with the invention, inasmuch as for some feeds and operating conditions a base metal steam reforming catalyst may suffice.

**TABLE V**

| | Catalytically Active Metals as Weight Percent of Catalyst | | |
|---|---|---|---|
| Catalyst | Ni | Pt | Rh |
| SR-1 | - | 1.4 | 0.6 |
| SR-3 | - | 1.4 | 0.6 |
| SR-7 | 14.5 | - | 0.5 |
| SR-11 | 15.4 | - | - |
| SR-12 | 14.5 | 0.35 | 0.15 |
| SR-13 | - | - | 2.0 |
| SR-14 | - | 1.0 | 1.0 |
| SR-16 | - | 1.7 | 0.3 |
| SR-18 | - | 2.0 | - |
| SR-19 | 15.0 | - | 0.5 |
| SR-20 | - | 1.4 | 0.6 |
| SR-22 | 14.5 | - | 0.5 |

All compositions except SR-11 comprise gamma-alumina pellets measuring approximately 1/16 inches (0.16 cm) in diameter, stabilized with 5 weight percent lanthana-baria. SR-11 is the commercially available catalyst G90C of Example 4, and SR-19 uses this commercially available catalyst as a base, to which the indicated catalytic metal is added.

## TABLE VI

Hydrocarbon feed: No. 2 fuel oil.

Preheat Temperature (line B of Fig. 1) = 482°C

| Run No. | Catalyst No. | $O_2$ to $C^2$ Ratio | $H_2O$ to $C^2$ Ratio | HC[(a)] Conv.,% | Unreacted HC Type | |
|---|---|---|---|---|---|---|
| | | | | | $CH_4$[(b)],% | Olefins[(c)],% |
| 7348 | SR-16 | 0.41 | 2.58 | 97.8 | 2.2 | 0.0 |
| 7238 | SR-1 | 0.44 | 2.72 | 96.9 | 3.1 | 0.0 |
| 7251 | SR-1 | 0.41 | 2.67 | 95.3 | 4.7 | 0.0 |
| 7344 | SR-14 | 0.41 | 2.58 | 96.6 | 3.3 | 0.0 |
| 7331 | SR-13 | 0.41 | 2.59 | 96.0 | 3.9 | 0.0 |
| 7328 | SR-18 | 0.41 | 2.60 | 95.4 | 2.3 | 1.6 |
| 7242 | SR-3 | 0.43 | 2.71 | 95.3 | 4.5 | 0.0 |
| 7340 | SR-20 | 0.41 | 2.58 | 95.1 | 2.7 | 0.0 |
| 7271 | SR-7 | 0.42 | 2.68 | 93.5 | 5.5 | 0.6 |
| 7255 | SR-12 | 0.43 | 2.65 | 91.6 | 7.3 | 0.7 |
| 7298 | SR-19 | 0.42 | 2.66 | 91.3 | 5.8 | 2.4 |
| 7365 | SR-22 | 0.42 | 2.57 | 91.0 | 5.4 | 2.6 |
| 7293 | SR-11 | 0.43 | 2.66 | 90.7 | 5.4 | 3.4 |
| 7307 | SR-11 | 0.42 | 2.66 | 89.0 | 6.0 | 4.6 |

(a) HC Conversion = $(CO + CO_2)_p/C_p$;
(b) Unreacted $CH_4$ = $(CH_4)_p/C_p$
(c) Unreacted Olefins = $(\text{Olefins})_p/C_p$
(In all cases, subscript p indicates composition in the product stream.)

The following examples illustrate operation of the catalytic partial oxidation process of the present invention in preferred modes for specific hydrocarbon feed stocks.

Example 6

A hydrocarbon feed stock comprising JP-4 was partially oxidized catalytically then the effluent was steam reformed with the same catalysts as employed in Example 3. The properties of the feed stock were:

API Gravity: 54.4
Sulfur Content: 30 ppm (weight)
Boiling Range: 58.9-232° C(138-450° F)
Aromatics Content: 15.5 weight percent

The $H_2O$ to carbon ratio was 2.65 and the $O_2$ to carbon molar ratio was 0.425. The results obtained are tabulated in Table VII below.

TABLE VII

| Constituents of Dried Product Gas | Dried Product Gas Composition, Mole % | |
|---|---|---|
| | As Measured | $N_2$ Free Basis |
| $H_2$ | 38.66 | 62.21 |
| CO | 10.74 | 17.28 |
| $CO_2$ | 12.71 | 20.45 |
| $N_2$ | 37.86 | - |
| $CH_4$ | 0.03 | 0.05 |
| Hydrocarbon Conversion | 99.9%(*) | 99.9%(*) |

(*) weight percent of quantity of hydrocarbon feed to the reactor

B. Throughput and Temperatures

Volumetric throughput rate, volumes of throughput at standard temperature and pressure per volume of catalyst per hour:

| | | |
|---|---|---|
| monolithic partial oxidation catalyst (item 2 in Fig. 1) | = | 131,000 |
| particulate steam reforming catalyst (item 4 in Fig. 1) | = | 7,050 |
| Interstage temperature (between items 2 and 4 in Fig. 1) | | 924°C |
| Preheat Temperature (line A of Fig. 1) | | 749°C |
| Exit Temperature (line B of Fig. 1) | | 823°C |

Example 7

A Liquid Petroleum Gas (LPG) feed stock was partially oxidized catalytically then steam reformed with the same catalysts as employed in Example 3. The composition of the feed stock was:

| | Mole % |
|---|---|
| Ethylene | 4.60 |
| Propane | 70.17 |
| Propylene | 25.07 |
| i-Butane | 0.15 |
| n-Butane | 0.01 |

The feed stock was not desulfurized for the test. The $H_2O$ to C ratio was 3.11 and the $O_2$ to C ratio was 0.50. The results obtained are listed in Table VIII below.

TABLE VIII

| Constituents of Dried Product Gas | Dried Product Gas Composition, Mole % As Measured | $N_2$ Free Basis |
|---|---|---|
| $H_2$ | 39.41 | 65.38 |
| CO | 8.78 | 14.57 |
| $CO_2$ | 12.09 | 20.05 |
| $N_2$ | 39.72 | - |
| $CH_4$ | 0.00 | 0.00 |
| Hydrocarbon Conversion | 100%(*) | 100%(*) |

(*)weight percent of quantity of hydrocarbon feed to the reactor.

B. Throughput and Temperatures

| | | |
|---|---|---|
| Volumetric throughput rate, volumes of throughput at standard temperature and pressure per volume of catalyst per hour: | | |
| monolithic partial oxidation catalyst (item 2 in Fig. 1) | = | 145,000 |
| particulate steam reforming catalyst (item 4 in Fig. 1) | = | 7,800 |
| Interstage Temperature (between items 2 and 4 of Fig. 1) | | 906 |
| Preheat Temperature (line A of Fig. 1) | | 749°C |
| Exit Temperature (line B of Fig. 1) | | 837°C |

Generally, the processes of the invention may be carried out at elevated pressure. In such case, a source of a hydrocarbonaceous feed, preferably a hydrocarbon feed, is compressed and may be passed through a heater to heat it to an elevated temperature. The heated, compressed feed may then be mixed in a suitable mixer with the oxygen-containing oxidant gas and $H_2O$, which may be supplied in the form of

steam. A separate air compressor may be used to compress air or other oxidant gases to the pressure at which the autothermal reforming operation is to be carried out and the steam may be generated at the appropriate pressure. In those cases where air is utilized as all or a portion of the oxidant gas and it is desired to reduce the content of, or substantially eliminate, nitrogen from the synthesis gas, the compressed air may be passed to an air separation zone wherein oxygen is separated from the compressed air by any suitable means known to those skilled in the art and passed to the mixer for passage therein as part of the inlet stream into the autothermal reformer. In such case, the removed nitrogen (as well as other inert air gases such as argon) is removed from the process and normally recovered as a nitrogen gas by-product. The removal of argon and other inert gases in the air separation zone is usually advantageous as it reduces the accumulation of inert gases which find their way into a synthesis loop, such as an ammonia or methanol synthesis loop, and thereby reduces the amount of purged gas which must be withdrawn from the loop.

When an air separation plant is utilized to provide an oxygen stream to serve as, or supplement, the oxidant gas, it may utilize any suitable type of air separation process including, for example, a cryogenic separation process, a membrane diffusion process or a pressure-swing absorption process utilizing inorganic absorbents or carbon molecular sieves. Heat available from the autothermal reforming process may be utilized in the air separation zone for those air separation processes which require a heat input.

Example 8

The same catalyst and feedstock as employed in Example 3 were utilized to prepare and test a product gas. All conditions and results obtained herein were identical to those of Example 3, except as otherwise set forth in Table IX following, with respect to temperature and product gas composition.

TABLE IX

A. Effluent Composition and Hydrocarbon Conversion

| Conversion of Dried Product Gas | Dried Product Gas Composition, Mole % As Measured |
|---|---|
| $H_2$ | 41.11 |
| CO | 11.52 |
| $CO_2$ | 12.51 |
| $N_2$ | 34.37 |
| $CH_4$ | 0.26 |
| $C_2H_6$ | 0.01 |
| Hydrocarbon Conversion | 98.8%(*) |

(*)weight percent of quantity of hydrocarbon feed to the reactor.

B. Throughput and Temperatures

Volumetric throughput rate, volumes of throughput at standard temperature and pressure per volume of catalyst per hour:

| | | |
|---|---|---|
| monolithic partial oxidation catalyst (item 2 in Fig. 1) | = | 126,000 |
| particulate steam reforming catalyst (item 4 in Fig. 1) | = | 6,500 |

| | |
|---|---|
| Interstage temperature (between items 2 and 4 of Fig. 1) | 942°C |
| Preheat Temperature (line A of Fig. 1) | 649°C |
| Exit Temperature (line B of Fig. 1) | 778°C |

The foregoing Example 8 shows the efficacy of the process for substantially complete (98.8%) conversion of a No. 2 fuel oil, which is a difficult feedstock to convert by conventional steam reforming. The process of the invention can of course readily handle lighter hydrocarbon feeds, which are easier to reform, and use higher $O_2$ to C ratios.

Methanol Synthesis

For the preparation of a hydrogen and carbon oxides containing synthesis gas suitable for methanol synthesis, oxygen is used as the oxidant stream in order to avoid introducing nitrogen of the air into the product gas. The basic chemistry for the synthesis of methanol is

$$(1) \quad CO + 2H_2 = CH_3OH$$

$$(2) \quad CO_2 + 3H_2 = CH_3OH + H_2O$$

Reaction (2) is seen to involve the water-gas shift reaction

$$(3) \quad CO_2 + H_2 = H_2O + CO$$

in combination with reaction (1).

As will be seen from the above chemistry, the ratio of hydrogen to the carbon oxides should be adjusted to provide at least one mol of $H_2$ to (1/2 mol CO + 1/3 mol $CO_2$). The flexibility of operation available by utilizing autothermal reforming in accordance with the present invention enables control of the $H_2O$ to carbon ratio and $O_2$ to carbon ratio at rather low levels, without the problem of carbon deposition on the catalyst. This flexibility enables the control of the output ratio of hydrogen to carbon oxides with a wide variety of feedstocks. Since operation close to the carbon deposition region is available with the catalysts of the present invention, low $H_2O$ to carbon ratios can be used. The following Table X shows the effect of some of these operating parameters in the autothermal reforming with resultant molar ratio of $H_2$: (1/2CO plus 1/3$CO_2$). Generally, $H_2$/ (2CO + 3$CO_2$) should be unity or greater, say from about 1.0 to 2.0 more preferably from about 1.3 to about 1.5.

TABLE X

| | | |
|---|---|---|
| Inlet Temperature (Line 136 in Fig. 3) | 649°C | (1200°F) |
| Exit Temperature (Line 144 in Fig. 3) | 982°C | (1800°F) |
| Reformer Pressure | 3.0MPa | (30 atm) |

| INLET CONDITIONS (Line 136 in Fig. 4 | | PRODUCT RESULTS (Line 146 in Fig. 4 | |
|---|---|---|---|
| $H_2O/C$ | $O_2/C$ | $CH_4$ Conversion, % | $H_2/(2CO + 3CO_2)$ |
| 3/1 | .5734 | 99.1 | 0.935 |
| 2/1 | .5452 | 98.0 | 0.9515 |
| 1/1 | .5054 | 94.0 | 0.9655 |

It will be appreciated that low $H_2O$ to carbon ratios enable the utilization of lower $O_2$ to carbon ratios, thereby reducing the needed capacity of an oxygen separation plant. Although the total amount of methane (or other hydrocarbon feed) converted is reduced thereby, the unconverted hydrocarbon is eventually recycled to the process. Thus, there is a trade-off between the effect of methane as an inert in the methanol synthesis loop versus the cost of the oxygen separation plant required.

The following Example 9 shows the operation of a methanol synthesis plant utilizing an autothermal reformer, giving typical results obtained thereby.

## Example 9

### Autothermal Reforming of Natural Gas to Supply a Methanol Synthesis Reactor

### Reformer Inlet Stream-(Line 136 of Fig. 4)

Temperature: 649°C (1200°F)

$H_2O/C$ Ratio: 2.00

$O_2/C$ Ratio: 0.542

Pressure: 6.86 Mpa (67.7 Atmospheres)

### Reformer Outlet Stream-(Line 144 of Fig. 4)

Temperature: 1010°C (1850°F)

| | FLOW RATES - MOLES/HR | | | |
|---|---|---|---|---|
| | Reformer Inlet Stream (Line 136 of Fig. 3) | Reformer Outlet (Line 144 of Fig. 3) | Reformer Inlet Stream (Dry Basis) | Reformer Outlet (Dry Basis) MOLE % |
| $H_2$ | - | 2.0662 | 2.0662 | 67.2 |
| $H_2O$ | 2.0 | 1.8273 | - | - |
| $CH_4$ | 1.0 | 0.0533 | 0.0533 | 1.7 |
| CO | - | 0.6375 | 0.6375 | 20.7 |
| $CO_2$ | .0049 | 0.3141 | 0.3141 | 10.2 |
| $O_2$ | .5416 | - | - | - |
| $N_2$ | .0032 | 0.0032 | 0.0032 | 0.2 |
| | | | | 100.00 |

$$H_2/(2CO + 3CO_2) = 0.932$$

Referring now to Figure 4, there is shown a schematic illustration of a methanol synthesis plant, which includes a synthesis gas making section, in accordance with one embodiment of the present invention. A source of hydrocarbonaceous feed, in this case a hydrocarbon feed, say natural gas, is introduced via line 110 and hydrocarbon feed compressor 112 for passage through a heater 114 and thence to a mixer 116 for admixture with oxygen, steam and recycled purge gas as described below.

Hydrocarbon feed compressor 112 compresses the hydrocarbon feed to the elevated pressure at which the autothermal reforming operation is to be carried out. Heater 114 may be of any conventional design and would include a burner means (not shown) for combusting a fuel therein to provide preheating by indirect heat transfer to the streams passing therethrough.

An air compressor 118 is supplied with atmospheric air via an inlet line 120 and compresses the air to the pressure at which the autothermal reforming operation is to be carried out. The compressed air is passed via line 122 to an air separation zone 128 wherein oxygen is separated from the compressed air by any suitable means known to those skilled in the art. The resultant oxygen stream is fed via line 130 through heater 114 for preheating and thence to mixer 116. In air separation zone 128, a nitrogen stream 129, which also contains rare inert gases, including argon, found in air is removed from the process and is normally recovered as a nitrogen gas by-product.

As illustrated in the schematic diagram of Figure 4, line 129 carries nitrogen, or at least a nitrogen-enriched stream, away from the air separation plant 128. It may also contain a substantial proportion, if not all, of the argon, which comprises about one percent of atmospheric air.

Make-up water is introduced via line 124 and, together with recycled water obtained as described below and introduced via line 126, enters boiler feed water pump 128 from where it is passed by line 130 through heat exchanger 132, in which the water is heated to steam and transmitted via line 134 into mixer 116. The mixed gases are passed via line 136 into autothermal reformer 142. Reformer 142 of Figure 4 has a neck portion 142a and a main body portion 142b within which are disposed, respectively, a monolithic platinum group metal partial oxidation catalyst and a platinum group metal steam reforming catalyst. In reformer 142, the inlet stream mixture of hydrocarbon feed, steam and oxygen is passed initially through a catalytic partial oxidation catalyst supported on a monolithic honeycomb carrier disposed within the neck portion 142a of reformer 142. The effluent from the first catalyst zone passes into the second catalyst zone comprising a platinum group metal steam reforming catalyst contained within main body portion 142b of autothermal reformer 142. Generally, as mentioned above, a portion, less than all, of the hydrocarbon feed content of the inlet stream is catalytically oxidized within the first catalyst zone. If $C_5$ or heavier hydrocarbons form a part of the feed, they are hydrocracked under the conditions prevailing in the first catalyst zone, to lighter, $C_1$ to $C_4$ constituents. The steam reforming reaction carried out in the second catalyst zone reacts $H_2O$ with unoxidized hydrocarbons to form hydrogen and carbon monoxide. Generally, the inlet stream components (hydrocarbon, oxygen and steam) react in autothermal reformer 142 to produce a mixture containing $H_2$,

$CO$, $CO_2$, $H_2O$ and a small amount of residual methane.

The effluent from autothermal reformer 142 is passed via line 144 through heat exchanger 132 as mentioned above. The cooled effluent then passes through cooling zone 138, wherein it is further cooled sufficiently to effectuate separation, in separation zone 140, of water from the effluent gases. Condensed water is withdrawn via line 126 and passed to boiler feed water pump 128 as described above. If it is desired to remove $CO_2$ from the process stream the scrubber may conveniently be inserted between separation zone 140 and compressor 148. The methanol synthesis gas, now essentially comprising $H_2$, residual unseparated $H_2O$, unreacted $CH_4$, CO and some $CO_2$ is passed via line 146 to synthesis gas compressor 148 of the methanol synthesis loop. Preferably from about 2 to about 10% $CO_2$ is left in the synthesis gas. The compressed synthesis gas is passed through line 150 in direct heat exchange in heat exchanger 152 with the effluent from methanol synthesis reactor 154, and then into the methanol synthesis reactor.

Any suitable methanol synthesis catalyst may be used within reactor 154, for example, various mixtures of copper, chromium, alumina and/or zinc oxide are known for use as methanol synthesis catalysts. Typical of these mixtures are: copper, alumina and zinc oxide; chromium and zinc oxide; copper, chromium and alumina and zinc oxide. Palladium on alumina is also an effective methanol synthesis catalyst.

Within synthesis reactor 154, which is typically operated at high pressure, from 13.8-27.6 MPa (about 1000-2000 psig) and relatively low temperature, e.g., about 150 - 400 °C, only about 5% of the hydrogen and carbon oxides are converted to methanol per pass through reactor 154. The effluent, containing methanol, the unreacted portion of the synthesis gas and small amounts of other reaction products, e.g., dimethyl ether and ethanol, is withdrawn from reactor 154 via line 156 and passed through heat exchanger 152 wherein it is cooled against the incoming synthesis gas as described above. The cooled gases are passed through a cooling zone 158 and then via line 160 to gas-liquid separator 162, wherein methanol and the heavier alcohols formed are condensed and withdrawn via line 164. The raw methanol in line 164 contains about 15% water as well as the dimethyl ether and ethanol and possibly other heavy alcohols. The raw methanol is dehydrated and purified by distillation as described below. However, if the methanol is to be used as a fuel, the trace amounts of ethanol and possibly other heavy alcohols may be retained in the methanol. Unreacted synthesis gas is removed from the top of separator 162 via line 166 and then introduced into line 146 for passage into synthesis gas compressor 148 and then back through reactor 154.

The methanol and other products separated as liquid from separator 162 are passed to a distillation zone represented by distillation column 168, wherein methanol is separated and withdrawn as product via line 170. The heavy alcohols are withdrawn from the bottom of column 168 via line 172 and a top end gas is withdrawn from the top of distillation column 168 via line 174. The heavy alcohols and dimethyl ether withdrawn from distillation column 168 may be recycled to autothermal reformer 142. Ethanol, which readily forms ethylene by dehydration, can readily be reformed in autothermal reformer 142 operated in accordance with the present invention. Ethanol would, however, be extremely difficult to reform in conventional steam reforming processes because of the tendency of the ethylene formed from it to cause carbon deposition on the catalyst in conventional reforming operations.

In order to control the level of impurities and inerts in the methanol synthesis loop, purge gas is removed via purge line 176 and may be recycled via line 130 and mixer 116 to reformer 142.

The methanol synthesis gas process of the present invention would find ready use, for example, in areas where supplies of natural gas are remote from markets for natural gas, or in areas where other hydrocarbon feeds, such as normally liquid hydrocarbons, are available for conversion to methanol.

An example of operation of an autothermal reformer in accordance with the present invention for the production of a methanol synthesis gas is well illustrated by the following Example 10, wherein a liquid petroleum gas feed-stock is autothermally reformed. The results obtained are shown in Table XI. Although the operation of Example 10 was actually carried out using air as the oxidant stream, the same results with the same $O_2$ to carbon and $H_2O$ to carbon ratios could be obtained utilizing oxygen as the oxidant stream, inasmuch as the nitrogen is essentially inert in the autothermal reforming process. The results of Table XI are reported on both an "as measured" and "nitrogen free" basis.

Example 10

A Liquid Petroleium Gas (LPG) feedstock was autothermally reformed with the same catalysts as employed in Example 3. The composition of the feedstock was:

| | Mole % |
|---|---|
| Ethylene | 4.60 |
| Propane | 70.17 |
| Propylene | 25.07 |
| i-Butane | 0.15 |
| n-Butane | 0.01 |

The feedstock was not desulfurized for the test. The $H_2O$ to C ratio was 3.11 and the $O_2$ to C ratio was 0.50. The results obtained are listed in Table XI below.

TABLE XI

| Constituents of Dried Product Gas | Dried Product Gas Composition, Mole % — As Measured | Dried Product Gas Composition, Mole % — $N_2$ Free Basis |
|---|---|---|
| $H_2$ | 39.4 | 65.38 |
| CO | 8.78 | 14.57 |
| $CO_2$ | 12.09 | 20.05 |
| $N_2$ | 39.72 | - |
| $CH_4$ | 0.00 | 0.00 |
| Hydrocarbon Conversion | 100%(*) | 100%(*) |

(*) weight percent of quantity of hydrocarbon feed to the reactor.

B. Throughput and Temperatures

| | |
|---|---|
| Volumetric throughput rate, volumes of throughput at standard temperature and pressure per volume of catalyst per hour: | |
| monolithic partial oxidation catalyst (item 2 in Fig1) | 145,000 |
| particulate steam reforming catalyst (item 4 in Fig. 1) | 7,800 |
| Interstage Temperature (between items 2 and 4 of Fig. 1) | 906 |
| Preheat Temperature (line A of Fig. 1) | 749°C |
| Exit Temperature (line B of Fig. 1) | 837°C |

The ratio of $H_2$ to ($2CO + 3CO_2$) in the product gas of Example 10 is 0.732 due to the high $H_2O/C$ ratio of 3.11 that was used. For methanol synthesis gas a lower $H_2O/C$ level is desirable. $CO_2$ can be readily

removed from this gas stream to adjust the ratio of $H_2$ to the carbon oxides. Upon removal of $CO_2$ from the gas stream, the ratio of $H_2$ to ($2CO + 3CO_2$) may be easily adjusted to from about 1.1 to about 2.1 while leaving in a small amount of $CO_2$.

## Ammonia Synthesis

Referring now to Figure 5, there is shown a schematic illustration of an ammonia synthesis plant which includes a synthesis gas making section in accordance with one embodiment of the present invention. A source of a hydrocarbonaceous feed, in this case a hydrocarbon feed is introduced via line 210 and hydrocarbon feed compressor 212 for passage through a heater 214 and thence to a mixer 216 for admixture with steam and oxygen-enriched air as described below. Hydrocarbon feed compressor 212 compresses the hydrocarbon feed to the elevated pressure at which the autothermal reforming operation is to be carried out. Heater 214 may be of any conventional design and would include a burner means (not shown) for combusting a fuel therein to provide preheating by indirect heat transfer to the streams passing therethrough.

An air compressor 218 is supplied with atmospheric air via an inlet line 220 and compresses the air to the pressure at which the autothermal reforming operation is to be carried out. A portion of the compressed air is passed via lines 222, 224 around an air separation zone 228 to a line 230 for passage to a heater 214 for preheating. Another portion of compressed air from air compressor 218 is passed through line 226 to air separation zone 228 wherein oxygen is separated from the compressed air by any suitable means known to those skilled in the art. The resultant oxygen stream is fed via line 230, into which the air from line 224 is introduced, for passage of the thus oxygen-enriched air via line 230 through heater 214 for preheating and thence to mixer 216. In air separation zone 228, a nitrogen stream 229 which also contains rare inert gases, including argon, found in air is removed from the process and is normally recovered as a nitrogen gas by-product.

As will be noted from Figure 5, it is seen that complete separation of a pure oxygen stream from the air is not necessary, but only that an oxygen enriched stream must be obtained to enrich the oxygen content of the air fed to autothermal reformer 242. As illustrated in the schematic diagram of Figure 5, line 229 carries nitrogen, or at least a nitrogen-enriched stream, away from the air separation plant 228. It may also contain a substantial proportion, if not all, of the argon, which comprises about one percent of atmospheric air, which enters zone 228.

Make up water is introduced via line 232 and boiler feed water pump 234 through heat exchanger 236 wherein the water, together with condensate water recycled from a subsequent point in the process as described below, is heated and steam is generated therefrom. The steam generated in heat exchanger 236 is passed via line 238 to mixer 216. A mixture of oxygen enriched air, steam and hydrocarbon feed obtained in mixer 216 is introduced via inlet line 240 into autothermal reformer 242.

In reformer 242, the inlet stream mixture of hydrocarbon feed, steam and oxygen-enriched air is passed initially through a catalytic partial oxidation catalyst supported on a monolithic honeycomb carrier disposed within the neck portion 242a of reformer 242. The effluent from the first catalyst zone passes into the second catalyst zone comprising a platinum group metal steam reforming catalyst contained within main body portion 242b of autothermal reformer 242. Generally, as mentioned above, a portion, less than all, of the hydrocarbon feed content of the inlet stream is catalytically oxidized within the first catalyst zone. If $C_5$ or heavier hydrocarbons form a part of the feed, they are hydrocracked under the conditions prevailing in the first catalyst zone, to lighter, $C_1$ to $C_4$ constituents. The steam reforming reaction carried out in the second catalyst zone reacts $H_2O$ with unoxidized hydrocarbons to form hydrogen and carbon monoxide. Generally, the inlet stream components (hydrocarbon, oxygen-enriched air, and steam) react in autothermal reformer 242 to produce a mixture containing $H_2$, CO, $CO_2$, $N_2$, $H_2O$ and a small amount of residual methane.

Effluent from autothermal reformer 242 is passed via line 244 through heat exchanger 236 as mentioned above. The temperature of the effluent in line 244 is sufficiently high so that superheated steam may be effectively generated in heat exchanger 236. After the heat exchange in exchanger 236, the autothermal reforming effluent is passed via line 246 to a high temperature shift conversion zone 250. A side stream of steam may be passed via line 248 to increase the proportion of steam in the effluent entering high temperature shift conversion zone 250 to improve the reaction conditions for the shift conversion.

Typically, the temperature of the effluent in line 244 from autothermal reformer 242 will be at a temperature of from 1600° to 1900°F (871° to 1038°C) and will be cooled in heat exchanger 236 to a

temperature of about 800° to 900° F (427° to 482° C), which is a temperature suitable for shift conversion as described below.

Shift converters are conventionally employed in conjunction with steam reforming operations. In steam reforming, the hydrocarbon reacts with $H_2O$ to yield a product gas containing primarily hydrogen and carbon monoxide, plus any unreacted hydrocarbons. In order to reduce the carbon monoxide level and enhance the hydrogen yield, the effluent of the steam reforming process may be passed into a so-called shift converter, in which the effluent is contacted with a catalyst of the known type over which carbon monoxide will react with $H_2O$ to yield carbon dioxide and hydrogen according to the following reaction:

$$CO + H_2O = CO_2 + H_2$$

This water gas shift reaction is often carried out in two stages, a first high temperature stage, e.g., 800° to 900° F (427° to 482° C) in order to secure high reaction rates and a second, low temperature stage, e.g., 700° to 750° F (371° to 399° C) to enhance the overall yield of the reaction. Accordingly, as shown in Figure 5, the effluent from reformer 242 is passed via lines 244, 246 into high temperature shift reactor zone 250 in which it is contacted with a suitable catalyst to carry out the shift reaction. Upon emerging from zone 250, the shift-reacted effluent may be passed via line 252 to a sulfur treatment zone 254, which may comprise any suitable equipment for removing or reducing the sulfur content of the gas stream, such as the known iron oxide or zinc oxide dry removal processes, or a known wet method for the removal of sulfur and sulfur compounds. The treated effluent from the sulfur treatment zone 254 is passed via line 256 to a low temperature shiff reactor zone 258 in which a second, low temperature shift reaction is carried out to convert carbon monoxide to carbon dioxide and hydrogen. The resultant hydrogen and nitrogen-rich gas stream, containing primarily $N_2$, $H_2$, $CO_2$ and $H_2O$ passes from low temperature shift converter zone 258 via line 260 for introduction into a selective oxidation zone 270.

Prior to passing to selective oxidation zone 270, the effluent from the low temperature shift reactor zone 258 is cooled in cooling and separation zone 262 and water is condensed therefrom. The resulting condensate water may be passed via line 266 together with make up water from boiler feed water pump 234, to heat exchanger 236. The gases are cooled in cooling zone 262 to a temperature suitable for the selective oxidation reaction to be carried out in selective oxidation zone 270, to which the cooled effluents are passed via line 260. Additional oxygen is introduced into the effluent entering selective oxidation zone 270, and this may be accomplished by taking a side stream of compressed air via line 272 and combining it with the cooled effluent in line 260 for passage into selective oxidation zone 270. The amounts of supplemental air introduced via line 272 is calculated both to supply sufficient oxygen for the selective oxidation process, and to provide a molar ratio of nitrogen to hydrogen in the product synthesis gas of approximately 3:1. Selective oxidation zone 270 may be any suitable selective oxidation process in which residual carbon monoxide contained in the effluent is contacted with a catalyst to selectively oxidize the carbon monoxide to carbon dioxide in the presence of hydrogen. A highly efficient catalyst for the purpose is sold under the trademark SELECTOXO by Engelhard Corporation. A selective oxidation process utilizable in an ammonia manufacturing operation is shown in U.S. Patent 4,238,468, issued December 9, 1980 to Bonacci et al, and assigned to Engelhard Corporation. After the selective oxidation treatment, the treated effluent is passed via line 274 to a carbon dioxide removal zone 276 wherein the residual carbon dioxide content of the effluent stream is further reduced by any suitable, known process. Removal or reduction to extremely low values of the carbon dioxide in the synthesis gas is advantageous in that carbon dioxide, under specific temperature and pressure conditions and concentrations, can react with ammonia to form carbamates, and this is of course undesirable in the ammonia synthesis process.

The selective oxidation process is thus utilized for removal or reduction of trace quantities of carbon oxide and is desirable as minimizing the amount of methane formed, as discussed below, in methanation zone 282. The formation of such methane consumes product hydrogen and it is therefore preferable to reduce the carbon monoxide content as much as feasible in zone 270.

The carbon dioxide reduced effluent is passed via line 278 through a second cooling and separation zone 280 in which additional water is condensed therefrom and the water condensate may be recycled via lines 268, 266 to heat exchanger 236 for return to the process as steam.

The cooled gas is then passed through a methanation zone 282 in which residual carbon oxides are contacted over a catalyst in a methanation step in which hydrogen reacts with CO and $CO_2$ to produce methane and water. It will be appreciated that the residual amounts of carbon oxides available to react in the methanation zone are very small. The resulting methane is an inert in the ammonia synthesis process

and tends to build up therein. Accordingly, the methane, along with other inerts, must be purged from the ammonia synthesis loop. But this is preferable to the adverse effect in the ammonia synthesis loop of either carbon monoxide, which is an ammonia synthesis catalyst poison, or carbon dioxide, which may react with ammonia as mentioned above, to form explosively decomposable solid carbamates.

The effluent from methanation zone 282 is withdrawn therefrom as product synthesis gas and may be passed through line 284 to an ammonia synthesis process. Figure 5 illustrates the so-called ammonia synthesis loop, in which the product synthesis gas from line 284 is passed via line 286 to a synthesis gas compressor 288 wherein it is compressed to an elevated pressure, say 6.9 to 103 MPa(1,000 to 15,000 psi)- and at a relatively low temperature, from about 200°to 600°C, suitable for ammonia synthesis. The compressed synthesis gas is passed via line 290 to an ammonia synthesis reactor 292 containing therein a catalyst suitable to react nitrogen with hydrogen to form ammonia. A small proportion only of the nitrogen and hydrogen in the synthesis gas is converted to ammonia in a single pass through the catalyst of ammonia synthesis reactor 292, and the partially reacted gas is passed through a cooling and separating zone 294 within which the effluent is cooled sufficiently to condense ammonia as a liquid therefrom. The ammonia synthesis catalyst is composed of iron oxides ($Fe_2O_3$ and FeO) that have been triply promoted with $K_2O$, $SiO_2$, and $Al_2O_3$. Various shapes and forms of this ammonia synthesis catalyst or any other ammonia synthesis catalyst can be used. A typical composition is: $Fe_2O_3$ 64-66 wt %; FeO 29-31 wt %; $Al_2O_3$ 2-3 wt %; $SiO_2$ 0-0.8 wt %; $K_2O$ 0-2 wt %. The ammonia is removed via line 296. The remaining synthesis gas is recycled via line 298, in which it is supplemented with fresh synthesis gas from line 284, and recycled through the ammonia synthesis loop. A purge line 299 removes a proportion of the gas circulating in the ammonia synthesis loop in order to control the build-up of inert gases in the loop. The purge gas removed from line 299 may, as is known to those skilled in the art, be treated to have removed therefrom argon, ammonia, methane, $CO_2$ and other impurities and be returned as synthesis gas to the process.

Generally, the key operating parameters for autothermal reforming to generate an ammonia synthesis gas are the preheat or inlet temperature (at line 240 of Figure 5), the pressure within autothermal reformer 242 and in inlet stream (line 240 of Figure 5), the oxygen to carbon ratio, the $H_2O$ to carbon ratio, and the $N_2$ to carbon ratio. The reference to carbon is of course the carbon content of the hydrocarbon feed and all such ratios are expressed as moles of $O_2$ or $H_2O$ to atoms of carbon. Since the process normally converts carbon oxides to hydrogen as part of the synthesis gas preparation, for ammonia synthesis it is desired that the molar ratio $(CO + H_2)/N_2$ exiting the autothermal reformer be approximately 3:1.

By utilizing the autothermal reforming process as described, a wide variety of hydrocarbonaceous feeds may be utilized and efficiently and economically converted into nitrogen and hydrogen containing synthesis gas. In addition to petroleum and coal derived hydrocarbons, as mentioned above, biomass-derived feeds providing carbon-containing compounds such as methane and H, O and N in compounds or as elements may be used. Such feeds may also contain sulfur or sulfur compounds. If the sulfur content of the feed is sufficiently high, the sulfur treatment zone as illustrated in Figure 5 will normally be required. If oxygen and nitrogen are present in the biomass-derived feed in appreciable amounts, they can provide at least a portion of the "air" for the process, and the atmospheric air introduced to the process can be reduced accordingly.

The following Examples 11 and 12 show typical operating conditions for the autothermal reformer utilized in accordance with the present invention. As indicated by the examples, generally, the $H_2O$ to C ratio is increased with increasing pressure in order to avoid an excessive increase of the methane content in the synthesis gas.

| | EXAMPLE 11 | | EXAMPLE 12 | |
|---|---|---|---|---|
| Pressure | 3.55 MPa (35 Atmospheres) (525 psia) | | 6.85 MPa (67.7 Atmospheres (1015 psia) | |
| Inlet Temperature | 1200°F (649°C) | | 1200°F (649°C) | |
| Inlet Stream (line 240 in Fig.5) (Lb.-Moles/W) | | (Mole %) | | (Mole %) |
| $CH_4$ | 1.000 | (20.0) | 1.000 | (18.2) |
| $H_2O$ | 2.500 | (50.0) | 3.000 | (54.5) |
| $O_2$ | 0.5722 | (11.4) | 0.6012 | (10.9) |
| $N_2$ | 0.9300 | (18.6) | 0.9060 | (16.4) |
| Exit Stream (line 244 in Fig.5) (Lb.-Moles/h) | | | | |
| $CH_4$ | 0.0185 | (0.3) | 0.0199 | (0.3) |
| $H_2O$ | 2.275 | (35.5) | 2.8067 | (40.9) |
| $O_2$ | -0- | | -0- | |
| $N_2$ | 0.9300 | (14.5) | 0.9060 | (13.2) |
| $H_2$ | 2.1930 | (34.3) | 2.1535 | (31.4) |
| CO | 0.5991 | (9.4) | 0.5646 | (8.2) |
| $CO_2$ | 0.3851 | (6.0) | 0.4156 | (6.0) |
| Exit Temperature | 1775°F | (6968°C) | 1840°F | (1004°C) |

Synthetic Natural Gas Producticn From Coal Gasification Liquids

Referring now to Figure 6, there is shown a schematic flow sheet illustration of a coal gasifier plant including an autothermal reforming section utilized to convert the liquid hydrocarbon by-product to secondary SG. A typical coal gasification plant, such as one according to the Lurgi design, includes a coal crushing and screening zone 310 to which coal is conveyed by suitable means for crushing and screening to segregate the coal particles by size, and any other treatments such as washing, etc. which may be required. Finely crushed coal is transmitted by means 312 to a power plant 314 to which water and air is supplied and in which the coal is burned to generate steam and electric power required in operation of the plant.

A coarse coal stream is fed via means 316 to a coal gasifier 318. Coal gasifier 318 may be of any suitable design, such as a Lurgi fixed bed reactor with rotating bottom grate, as briefly described above. Steam is transmitted via lines 320, 322 from power plant 314 to coal gasifier 318.

An air separation plant 324 is supplied with air and, by any suitable technique, separates an oxygen stream from the air. Nitrogen is removed via line 326 and oxygen transmitted via lines 328, 330 to coal

gasifier 318. It will be understood that in the case of the Lurgi coal gasifier design, as mentioned above, the steam and oxygen are transmitted through the gasifier counter-currently to descending stream of coarse coal particles. Under the conditions of temperature and pressure maintained in coal gasifier 318, gasifier SG is generated in coal gasifier 318, together with a liquid hydrocarbon by-product, both of which are removed from coal gasifier 318 via line 332. Ash is removed from coal gasifier 318 via line 334. The gasifier SG and liquid hydrocarbon by-product are quenched in quench zone 336 from which the liquid hydrocarbon by-product is removed via line 338. The gasifier SG is transmitted via line 340 to a gas purification zone 342 in which carbon dioxide and hydrogen sulfide are removed therefrom by any suitable, known treatment.

The liquid hydrocarbon by-product is transmitted via line 338 to a gas-liquor separation zone 346 in which a gaseous fraction largely comprising ammonia and gasified phenolics is separated and removed via line 348 to a phenols separation zone 350, wherein off-gases including ammonia are separated and removed via line 352. The phenolics are transmitted via line 354 to a blending zone 356 wherein the recovered phenolics are combined with the liquor separated from gas-liquor separation zone 346 via line 358.

A typical composition for the liquid hydrocarbon by-product, comprising the re-combined phenolics and liquor in line 360, is given in Table XII.

TABLE XII

Composition of Typical Hydrocarbon Liquid By-Product.

| Component | Average Formula | Average Molecular Weight |
|---|---|---|
| 1) Oil | $C_{13.5}H_{18}$ | 180 |
| 2) Tar | $C_{11}H_{10}O$ | 158 |
| 3) Phenolics | $C_7H_8O$ | 108 |
| 4) Blend of 1), 2) and 3) | $C_{11}H_{14.3}O$ | 162 |

The hydrocarbon by-product is transmitted via line 360 to a solids removal zone 362 wherein ash and heavy tar components are separated and removed via line 364. The hydrocarbon by-product may be treated by any suitable technique such as filtration and/or distillation for solids removal in zone 362. In such process, metals and residual ash in the hydrocarbon by-products together with the heaviest tar fractions thereof are removed.

While any suitable method or combination of methods for removing solids and metals and the heavy tar fraction may be utilized, a particularly useful and efficient method is the ART$^{SM}$ treatment developed by Engelhard Corporation, the assignee of this application. This process utilizes an ARTCAT$^{TM}$ material to carry out an asphalt residual treatment process which is highly effective and efficient in treating heavy petroleum or other hydrocarbon containing fractions to render them suitable for processing to more valuable materials.

The ash and heavy tar removed via line 364 may be cycled to power plant 314 for combustion of the combustible values therein to supplement the coal supplied as fuel thereto. The thus-treated liquid hydrocarbon byproduct is passed via line 366 through a heat exchanger 368 in which it is heated by indirect heat exchange as described below, and thence into a mixer 370.

An oxygen stream is transmitted from air separation zone 324 via lines 328, 372 and steam is transmitted from power plant 314 via lines 320, 374 through a heat exchanger 376 for indirect heat exchange as explained below, thence to mixer 370 wherein the oxygen, steam and treated liquid hydrocarbon by-product are admixed for transmission via line 378 as the inlet stream to an autothermal reformer 380.

In reformer 380 the mixture of hydrocarbon by-product, steam and oxygen is passed through a catalytic partial oxidation catalyst supported on a monolithic honeycomb carrier disposed within neck portion 380a of reformer 380. Some, but not all of the hydrocarbon is catalytically oxidized within the first catalyst zone contained within neck portion 380a and the heavier unoxidized hydrocarbons are hydrocracked to lighter constituents, mostly $C_1$ hydrocarbons, with a very minor amount of $C_2$ and $C_3$ hydrocarbons. Methane is

the predominant hydrocarbon product attained by the hydrocracking. Depending on the specific nature of the hydrocarbon by-product fed to autothermal reformer 380 and the specific operating conditions utilized therein, the hydrocarbon by-product may be substantially entirely converted to a gaseous product containing $H_2$, $H_2O$, $CH_4$, CO and $CO_2$. However, under conditions in which a significant amount of heavier hydrocarbons would remain in the effluent from the first catalyst zone, a second catalyst zone may be disposed within main body portion 380b of reformer 380. In the second catalyst zone a steam reforming reaction is catalyzed to convert hydrocarbons to hydrogen and carbon oxides.

It is of course desired to provide a high methane content in the secondary SG. Therefore, the exit temperature of the gases exiting via line 382 is preferably controlled to reduce the amount of $C_2$ and $C_3$ compounds formed within reformer 380. For example, an outlet temperature at line 382 of about 1,400 °F (760 °C) has been found to be satisfactory to hydrocrack the material within the first catalyst zone to mostly $C_1$ hydrocarbons, i.e., CO, $CO_2$ and $CH_4$. A methanation step as described below, for reacting carbon monoxide and hydrogen to methane, is conveniently utilized in the process. It is therefore desirable to also control the conditions within reformer 380 to provide in the gas obtained therein a molar ratio of hydrogen to carbon monoxide of slightly more than 3:1, the molar ratio in which the two gases react to form methane and $H_2O$.

The effluent gas from reformer 380 is passed via line 382 through heat exchanger 376 to heat therein the oxygen and steam being transmitted via, respectively, lines 372 and 374 to mixer 370. The reformer effluent is then passed through heat exchanger 368 to heat the incoming liquid hydrocarbon by-product in line 366. The cooled reformer effluent gas is passed via line 382 to a quench zone 384 wherein the gas is cooled and water is separated therefrom via line 386. The cooled secondary SG is passed via line 388 to be introduced into line 340 to be admixed with the gasifier SG and the combined gases are then passed to gas purification zone 342 wherein acid gases, e.g., $CO_2$ and $H_2S$, are removed by known techniques and withdrawn via line 345. The purified combined gases are then passed to methanation zone 390 in which carbon monoxide contained therein is reacted with hydrogen to methane and $H_2O$, thereby increasing the overall methane content of the product synthesis gas which is withdrawn therefrom via line 392. It is this product, after drying to remove water, which is usually called "synthetic natural gas" or "SNG".

The following example exemplifies operating conditions and results obtained in treating a liquid hydrocarbon by-product which has been treated, as described above, for the removal of ash and heavy tars therefrom.

Example 13

| Inlet Stream (378 in FIG. 6 Composition) | kg-moles. $h^{-1}$ (lb.-moles per hour) | $O_2$ to C Ratio | $H_2O$ to C Ratio |
|---|---|---|---|
| 1) Feed—item (4) of Table X | 376 (828) | 0.176 | 2.00 |
| 2) Steam | 8263(18,216) | | |
| 3) Oxygen | 727 (1,602) | | |

Temperature of Inlet Stream (378 in FIG. 6) = 800 °F (427 °C) Pressure - 31.4 MPa (31 atmospheres).

| Effluent Gas (382 in FIG 6) Composition | kg-moles. $h^{-1}$ (lb.-moles per hour) | |
|---|---|---|
| $H_2$ | 3776 | (8,325) |
| $H_2O$ | 5086 | (11,212) |
| $CH_4$ | 1043 | (2,300) |
| CO | 1215 | (2,679) |
| $CO_2$ | 1918 | (4,229) |

Temperature of Effluent Gas (382 in FIG. 6) - 1,400°F (760°C) Pressure of Effluent Gas = 30.4 MPa(30 atmospheres)

It will be seen that upon removal of $H_2O$ and $CO_2$, and conversion of CO and $H_2$ to $CH_4$ by methanation, a predominantly hydrogen and methane containing synthetic natural gas is obtained from the secondary SG to supplement the synthesis natural gas obtained from the gasifier SNG.

Liquid Hydrocarbon Production From Natural Gas

Referring now to Figure 7, there is shown a schematic illustration of a Fischer-Tropsch ("F-T") synthesis plant including an autothermal reformer section. A source of a methane-containing hydrocarbon feed, in this case natural gas, is introduced through line 410 and hydrocarbon feed compressor 412 via line 478 for passage through a heater 414 and thence to a mixer 416 for admixture therein with steam, recycled carbon dioxide, and oxygen, by-product hydrocarbons as described below. Line 478 also conducts by-product hydrocarbons comprising light ends and heavy ends, representing, as described below, the economically less valuable hydrocarbon by-products of the Fischer-Tropsch synthesis process, from the F-T synthesis to the autothermal reformer. Hydrocarbon feed compressor 412 compresses the hydrocarbon feed to the elevated pressure at which the autothermal reforming operation is to be carried out. Heater 414 may be of any conventional design and may include a burner means (not shown) for combusting a fuel therein to provide preheating by indirect heat transfer to the streams passing therethrough.

An air compressor 418 is supplied with atmospheric air via an inlet line 420 and passes the compressed air via outlet line 422 to an air separation zone 424 which may comprise any conventional plant or means for separating the constituents of air. Essentially, oxygen and nitrogen of the air are separated, the nitrogen is withdrawn via line 426 and the separated oxygen passed via line 428 through heater 414 wherein it is heated by indirect heat exchange and the heated oxygen stream is then passed to mixer 416. Air separation plant 424 may use any suitable type of air separation process including, for example, a cryogenic separation process, a membrane diffusion process, or a pressure-swing absorption process utilizing inorganic absorbents or carbon molecular sieves.

Make-up water is introduced via line 430 and boiler feed water pump 432 through a heat exchanger 434 wherein the water, together with recycle water obtained from a subsequent point in the process as described below, is heated and steam is generated therefrom. The steam generated in heat exchanger 434 is passed via lines 436, 438 to mixer 416. In line 438, the steam from line 436 is admixed with carbon dioxide recycled from a subsequent point in the process as described below. The methane and by-product hydrocarbons, steam, oxygen and recycled carbon dioxide are thoroughly mixed within mixer 416 and passed via line 440 to autothermal reformer 442.

In reformer 442, the inlet stream mixture passing through line 440 is passed initially through a catalytic partial oxidation catalyst supported on a monolithic honeycomb carrier disposed within neck portion 442a of reformer 442. The effluent from the first catalyst zone passes into the second catalyst zone comprising a platinum group metal steam reforming catalyst contained within main body portion 442b of autothermal reformer 442.

Generally, as mentioned above, a portion, less than all, of the hydrocarbon feed content of the inlet stream 440 is catalytically oxidized within the first catalyst zone, which contains a palladium and platinum partial oxidation catalyst. The $C_5$ or heavier hydrocarbons introduced into autothermal reformer 442 by

recycle of the heavy ends of the F-T by-product hydrocarbons are hydrocracked under the conditions prevailing in the first catalyst zone to lighter $C_1$ to $C_4$ constituents, predominantly $C_1$ constituents. The $C_1$ to $C_3$ light ends from the F-T process are also reformed in autothermal reformer 442. The steam reforming reaction carried out in the second catalyst zone reacts $H_2O$ with unoxidized hydrocarbons to form hydrogen and carbon monoxide. Generally, within autothermal reformer 442 the hydrocarbons are reacted to produce an outlet mixture in outlet line 444 comprising $H_2$, CO, $CO_2$ and $H_2O$.

The effluent from autothermal reformer 442 is passed via line 444 through heat exchanger 434 as mentioned above. The temperature of the effluent in line 444 is sufficiently high so that superheated steam at an efficient high temperature may be effectively generated in the heat exchanger 434. After the heat exchange in heat exchanger 434, the cooled effluent is passed via line 446 to a $CO_2$ removal zone 448 wherein carbon dioxide is separated from the gas stream by any conventional means. The carbon dioxide removed is recycled via line 438 to mixer 416 as described above. A carbon dioxide purge line 450 withdraws a proportion of the recycle carbon dioxide from the process, as is necessary to reduce the build-up of inerts, such as residual rare gases and nitrogen contained in the oxygen which was separated in air separation plant 424. Water is also removed from the effluent of reformer 442 and is recycled via line 452 to line 430, thence to boiler feed water pump 432 for recycle to the process.

The cooled effluent gas, from which carbon dioxide and $H_2O$ have been removed, and comprising essentially carbon monoxide and hydrogen, is passed via line 454 to the F-T synthesis reactor. Depending upon the type of reactor used in the F-T process, and the process conditions maintained therein, a variety of ratios of hydrogen to carbon monoxide may be selected for passing to the F-T synthesis. The ratio of hydrogen to carbon monoxide in the synthesis gas may be adjusted by controlling the ratio of carbon dioxide recycled via line 438 and the ratio of $H_2O$ to carbon introduced in inlet stream 440. The following Table XIII illustrates the effect on the $H_2$ to CO ratio of the product synthesis gas, after $CO_2$ and $H_2O$ removal, of varying these parameters. Four different cases, numbered (1) - (4), are illustrated.

TABLE XIII

EFFECT OF AUTOTHERMAL REFORMING OPERATING PARAMETERS ON PRODUCT GAS $H_2$/CO RATIO

| | | |
|---|---|---|
| INLET TEMPERATURE | 649°C | (1200°F) |
| PRESSURE | 2.74MPa | (400 psia) |
| REFORMER EXIT TEMPERATURE (Line 444 of FIG. 7) | 954°C | (1750°F) |

| | INLET STREAM (Line 440 of FIG. 7) MOLES/HR | | | | | PRODUCT GAS $H_2$/CO RATIO |
|---|---|---|---|---|---|---|
| Case | $H_2O$ | $CH_4$ | $CO_2$ | $O_2$ | $H_2O$/C | |
| (1) | 1 | 1 | 0.2 | .5117 | .83 | 2.22 |
| (2) | 2 | 1 | 0.2 | .5030 | 1.66 | 2.79 |
| (3) | 1 | 1 | 0.4 | .5322 | .71 | 1.85 |
| (4) | 1 | 1 | 0.6 | .5500 | .63 | 1.59 |

The desired ratio of $H_2$ to CO in the synthesis gas provided to the F-T synthesis reactor may also vary depending on the type of reactor utilized in the F-T synthesis unit and the process conditions utilized. The following Table XIV lists four different types of known F-T reactors with a typical hydrogen to carbon monoxide ratio therefor, at an operating temperature of 300°C and pressure of 2.74 MPa(400 psia.)

TABLE XIV

| Reactor Type | $H_2/CO$ |
|---|---|
| Entrained Bed | 2.4 |
| Tube-Wall | 2.0 |
| Slurry | 0.7 |
| Ebulliating | 0.7 |

The autothermal reformer utilized in accordance with the present invention is well suited to provide any selected ratio of hydrogen to carbon monoxide because of its flexibility in reforming a methane feed or a methane and recycle hydrocarbon feed, and its ability to handle a wide ratio of carbon dioxide recycle to the reformer. Generally, low $H_2O$ to carbon ratios and high $CO_2$ recycle provide a lower hydrogen-to-carbon monoxide ratio in the synthesis gas produced.

For case (4) illustrated in Table XV, i.e., wherein a hydrogen to CO ratio of 1.59 is desired, the following gives typical operating conditions with respect to the flow sheet of Figure 7.

TABLE XV

| | | | |
|---|---|---|---|
| INLET TEMPERATURE | 649°C | (1200°F) | In line 440 of FIG. 7. |
| PRESSURE | 2.74MPa | (400 PSIA) | |
| EXIT TEMPERATURE (In line 444 of FIG. 2) | 954°C | (1750°F) | |

| | kg. moles/L (LB MOLES/HR) | | |
|---|---|---|---|
| | Reformer Inlet (Line 440 of FIG.7) | Reformer Exit (Line 444 of FIG.7) | FISCHER/TROPSCH Inlet (Line 454 of FIG.7) |
| $H_2$ | -- | 0.7676 (1.6923) | 0.7676 (1.6923) |
| $H_2O$ | 0.45 (1) | 0.5605 (1.2358) | -- |
| $CH_4$ | 0.45 (1) | 0.0163 (0.0359) | 0.0163 (0.0359) |
| CO | -- | 0.4826 (1.0640) | 0.4826 (1.0640) |
| $CO_2$ | 0.27 (0.6) | 0.2268 (0.5000) | -- |
| $O_2$ | 0.25 (0.55) | -- | -- |

Referring again to Figure 7, a typical carbon dioxide purge rate is 0.1 mole per mole of $CH_4$ or equivalent fed to autothermal reformer 442. About 90% of the carbon atoms fed to autothermal reformer 442 are converted to liquid hydrocarbons in the F-T reactor.

Generally, any suitable type of hydrocarbon synthesis reactor, specifically, any known type of Fischer-Tropsch reactor, may be used in accordance with the invention in continuation with the autothermal reformer. However, a F-T reactor and process conditions which favor the production of gasoline and diesel fuel would tend to reduce the amount of recycle of commercially less desirable hydrocarbon by-products from the F-T process to the autothermal reformer. The slurry type reactor and the entrained bed type reactor are both attractive for gasoline production.

As shown in Figure 7, the synthesis gas of desired hydrogen to carbon monoxide ratio is passed via line 454 to a heat exchanger 456 in which it is heat exchanged with the effluent from a F-T synthesis reactor 458, and the heated synthesis gas is passed via line 460 into reactor 458, from which it emerges via

line 462 and is passed in heat exchange with the incoming synthesis gas in heat exchanger 456 as mentioned above.

Fischer-Tropsch synthesis and the various reactor designs of Fischer-Tropsch reactors utilized to carry it out are well known in the art. For example, see the article "F-T Process Alternatives Hold Promise" by Wolf-Dieter Deckwer, pages 198-213 of Oil & Gas Journal , November 10, 1980 and the article "Fischer-Tropsch Processes Investigated at the Pittsburg Energy Technology Center Since 1944" by Michael J. Baird, Richard Schehl and William P. Haynes, Ind. Eng. Chem. Res. Dev. , 1980, 19, pages 175-191.

Essentially, the Fischer-Tropsch synthesis is the hydrogenation of carbon monoxide. A variety of compounds are obtained but the main reactions can be summarized by

$$nCO + 2nH_2 \longrightarrow -(CH_2)_n- + nH_2O$$

With a suitable catalyst, e.g., Fe, the water also reacts as

$$CO + H_2O \longrightarrow H_2 + CO_2$$

so that the overall reaction can be written

$$2\ nCO + nH_2 \longrightarrow (CH_2)_n + nCO_2$$

A range of hydrocarbons is obtained in the synthesis, the distribution of which depends on the F-T catalyst employed, the type of reactor used, etc. Typically, the synthesized hydrocarbons comprise mostly unbranched paraffins and olefins with molecular weights ranging from 16 ($CH_4$) to about 20,000.

With reference now to Figure 7, the cooled products of the F-T synthesis reaction are passed via line 464 to a distillation zone represented by column 466, wherein the mixture of hydrocarbons obtained in the F-T synthesis is separated into fractions. As indicated in Figure 7, a liquid petroleum gas (LPG) is taken off via line 468, a gasoline fraction via line 470 and a diesel fuel fraction via line 472. Obviously, the Fischer-Tropsch synthesis may be adjusted to obtain a different product mix and to vary proportions of the mix as desired.

The light and heavy ends, which are commercially less valuable than the fractions removed by lines 468, 470, and 472, can be recycled to the autothermal reformer 442 via, respectively, lines 474 and 476 which join line 478 for passage through heater 414, together with natural gas feed introduced into line 478 via HC compressor 412. The hydrocarbon mixer is then passed through heater 414 for indirect heat exchange heating prior to passage to mixer 416, as described above.

Table XVI shows a typical hydrocarbon product and by-product mix obtained in two types of F-T synthesis reactors.

TABLE XVI

Hydrocarbon Yield For Two Types of Fischer/Tropsch Reactor

| | Yield, Weight% | |
|---|---|---|
| Hydrocarbon Fraction | Entrained Bed | Slurry Reactor |
| $C_1$ | 12.7 | 2.2 |
| $C_2$-$C_4$ | 36.3 | 31.7 |
| Gasoline | 28.7 | 56.5 |
| Diesel | 9.5 | 7.3 |
| Heavy | 3.5 | 0.6 |
| Alcohols | 8.1 | 1.7 |
| Acids | 1.2 | -- |
| TOTAL | 100 | 100 |

The $C_1$, $C_2$ to $C_4$, heavy, alcohols and acids fractions identified in Table XVI would typically be recycled to autothermal reformer 442 as the hydrocarbon by-products. These recycle streams will contain olefins as well as some aromatics. Nonetheless, the platinum group metal catalyst utilized in autothermal reformer 442, and operation of autothermal reformer 442 in accordance with the present invention, will enable efficient reforming of this difficultly reformable feed to provide hydrogen and carbon monoxide therefrom. The gasoline and diesel fractions of course represent valuable products.

While the invention has been described in detail with respect to specific preferred embodiments thereof, it will be appreciated that those skilled in the art, upon a reading and understanding of the foregoing, may envision modifications and variations to the preferred embodiments which are nonetheless within the scope of the claims.

## Claims

**1.** A process for producing a hydrogen-rich gas by preheating an inlet stream comprising a hydrocarbonaceous feed, $H_2O$ and an oxygen-containing oxidant gas to a preheat temperature at least sufficiently high to initiate catalytic oxidation of said hydrocarbonaceous feed, and introducing the preheated inlet stream into a first catalyst zone (24a)to carry out catalytic partial oxidation therein, characterized in that:

(a) the first catalyst zone (24a) comprises a monolithic body (27) having a plurality of gas flow passages extending therethrough and having a catalytically effective amount of palladium and platinum catalytic components dispersed therein, the amounts of hydrocarbonaceous feed, $H_2O$ and oxygen introduced into said first catalyst zone (24a) being controlled to maintain in said inlet stream an $H_2O$ to C ratio of at least about 0.5, and an $O_2$ to C ratio of at least about 0.2 but less than the stoichiometric amount of oxygen necessary to oxidize all the carbon of said feed to $CO_2$;

(b) contacting the preheated inlet stream within said first catalyst zone (24a) with said palladium and platinum catalytic component on said monolith (27) to initiate and sustain therein catalytic oxidation of at least a sufficient quantity of said hydrocarbon feed to attain an elevated temperature within said first catalyst zone (24a) at least high enough to crack unoxidized $C_5$ or heavier hydrocarbons, if any

be present, to light hydrocarbons not heavier than $C_4$ hydrocarbons, the temperature of at least a portion of said monolithic body (27) being at least about 121 °C higher than the ignition temperature of said inlet stream, whereby to produce a first catalyst zone effluent comprising, predominantly, hydrogen, carbon oxides and said light hydrocarbons; and
(c) withdrawing the first catalyst zone effluent as a hydrogen-rich gas.

**2.** The process of claim 1 further characterized in that the hydrocarbonaceous feed is a hydrocarbon feed and the elevated temperature attained in step (b) is high enough to catalytically steam reform hydrocarbons remaining in said first catalyst zone effluent without necessity of supplying external heat thereto.

**3.** The process of claim 1 or claim 2 further characterized in that said first catalyst zone (24a) comprises palladium, platinum and, optionally, rhodium catalytic components distended upon a refractory metal oxide support layer carried on said monolithic body.

**4.** The process of claim 3 further characterized in that a volumetric hourly rate of at least 100,000 volumes of throughput per volume of catalyst is maintained in said first catalyst zone (24a).

**5.** The process of claim 1 or claim 2 further characterized in that the amounts of hydrocarbonaceous feed, $H_2O$ and oxygen introduced into said first catalyst zone (24a) are controlled to provide therein an $H_2O$ to C ratio of about 0.5 to 5 and an $O_2$ to C ratio of from about 0.2 to 0.8.

**6.** The process of claim 1 or claim 2 further characterized in that the process is carried out at a pressure of about atmospheric pressure up to 142 kg/cm$^2$.

**7.** The process of claim 1 or claim 2 further characterized in that the first catalyst zone effluent, while it is at an elevated temperature, is passed from said first catalyst zone (24a) to a second catalyst zone (24b) containing a platinum group metal steam reforming catalyst (31) therein and is contacted in said second catalyst zone (24b) with said steam reforming catalyst (31) to react hydrocarbons in said first catalyst zone effluent with $H_2O$ to produce hydrogen and carbon oxides therefrom, and the effluent of said second catalyst zone (24b) is withdrawn as a hydrogen-rich gas.

**8.** The process of claim 7 further characterized in that a volumetric hourly rate of at least 100,000 volumes of throughput per volume of catalyst is maintained in said first catalyst zone (24a) and a volumetric hourly rate of about 2,000 to 20,000 volumes of throughput per volume of catalyst is maintained in said second catalyst zone (24b).

**9.** The process of claim 8 further characterized in that the process is carried out at a pressure of about atmospheric pressure up to 142 kg/cm$^2$.

**10.** The process of claim 2 further characterized in that said oxidant gas comprises oxygen-enriched air and wherein the amounts of feed, $H_2O$ and oxygen introduced into said first catalyst zone (24a) are controlled to maintain in said inlet stream an $H_2O$ to C ratio of from about 0.5 to 5 and an $O_2$ to C ratio of from about 0.35 to 0.65, and said effluent of said second catalyst zone (24b) comprises a synthesis gas which is cooled, the carbon monoxide in said cooled synthesis gas is reacted with $H_2O$ to produce hydrogen; sulfur containing compounds and $H_2O$ are removed from said synthesis gas; said synthesis gas is passed into an ammonia synthesis loop (286, 290,292, 298) to react the hydrogen with nitrogen thereof over an ammonia synthesis catalyst at ammonia synthesis conditions; and ammonia is withdrawn as product from said ammonia synthesis loop.

**11.** The process of claim 10 further characterized in that said hydrocarbonaceous feed is a hydrocarbon feed, the air in the inlet stream (240) is enriched to at least about 33%, preferably about 33 to 50%, by volume oxygen and the preheat temperature is from about 427° to 760 °C.

**12.** The process of claim 11 further characterized in that the amounts of feed, $H_2O$, air and oxygen introduced into said first catalyst zone (24a) are controlled to maintain in said inlet stream (240) an $H_2O$ to C ratio of from about 1 to 4, and an $O_2$ to C ratio of from about 0.5 to 0.6, and the process is carried out at superatmospheric pressure.

**13.** The process of claim 11 further characterized in that said first catalyst zone (242a) is maintained at a temperature of from about 954° to 1316° C and the first catalyst zone effluent is introduced into said second catalyst zone (242b) at substantially a temperature of from about 954° to 1316° C.

**14.** The process of claim 2 further characterized in that said oxidant gas comprises oxygen and the amounts of feed, $H_2O$ and oxygen introduced into said first catalyst zone (142a) are controlled to maintain in said inlet stream (136) an $H_2O$ to C ratio of from about 0.5 to 3 and an $O_2$ to C ratio of from about 0.35 to 0.65, and said effluent of said second catalyst zone comprises a synthesis gas, the synthesis gas is cooled and sulfur-containing compounds and $H_2O$ are removed therefrom; said synthesis gas is passed to a methanol synthesis loop (148, 150, 154, 156, 160, 166) to react the hydrogen with carbon oxides thereof over a methanol synthesis catalyst at methanol synthesis conditions; and methanol is withdrawn as product from said methanol synthesis loop.

**15.** The process of claim 14 further characterized in that said hydrocarbonaceous feed is a hydrocarbon feed and the preheat temperature is from about 472° to 760° C.

**16.** The process of claim 15 further characterized in that the amounts of feed, $H_2O$ and oxygen introduced into said first catalyst zone (142a) are controlled to maintain in said inlet stream (136) an $H_2O$ to C ratio of from about 1 to 2.5 and an $O_2$ to C ratio of from about 0.5 to 0.6, and the process is carried out at superatmospheric pressure.

**17.** The process of claim 15 further characterized in that said first catalyst zone is maintained at a temperature of from about 954° to 1316° C and the first zone effluent is introduced into said second catalyst zone at substantially a temperature of from about 954° to 1316° C.

**18.** The process of claim 1 further characterized in that said hydrocarbonaceous feed comprises the liquid hydrocarbon by-product of a coal gasification process in which coal is reacted with steam and oxygen to produce (i) gasifier synthesis gas which is methanated to produce a synthesis natural gas and (ii) said liquid hydrocarbon by-product, and wherein said inlet stream is preheated to a temperature of less than about 649° C, and the temperature of at least a portion of said monolith (27) is at least about 139° C greater than the ignition temperature of said inlet stream, but not more than about 1,093° C, said oxidant gas comprises oxygen, and the amounts of liquid hydrocarbon by-product, $H_2O$ and oxygen introducted into said first catalyst zone are controlled to maintain in said inlet stream (378) an $H_2O$ to C ratio of from about 0.5 to 5 and an $O_2$ to C ratio of from about 0.15 to 0.4, whereby to produce a first catalyst zone effluent comprising primarily methane, hydrogen, carbon monoxide, carbon dioxide, $H_2O$ and $C_2$ - $C_4$ hydrocarbons; wherein said effluent is passed to a treatment zone (384, 342) for the removal of carbon dioxide and water therefrom; the thus-treated first catalyst zone effluent is withdrawn as a secondary synthesis gas; and said gasifier synthesis gas and said secondary synthesis gas are methanated in a methanation zone (390) to provide synthetic natural gas therefrom.

**19.** The process of claim 18 further characterized in that said first catalyst zone effluent, while still at an elevated temperature, is passed from said first catalyst zone (380a) to a second catalyst zone (380b) containing a steam reforming catalyst therein, and the first catalyst zone effluent is contacted in said second catalyst zone (380b) with said steam reforming catalyst (31) to react hydrocarbons therein with $H_2O$ to produce hydrogen and carbon oxides therefrom, and then the effluent of said second catalyst zone is passed as said effluent to said treatment zone (384, 342).

**20.** The process of claim 19 further characterized in that preheat temperature is about 427° to 649° C.

**21.** The process of claim 19 further characterized in that said first catalyst zone (380a) is maintained at a temperature of from about 760° to 1093° C and the first catalyst zone effluent is introduced into said second catalyst zone (380b) at substantially a temperature of from about 760° to 1093° C.

**22.** The process of claim 2 further characterized in that said hydrocarbonaceous feed is a normally gaseous hydrocarbon feed, said oxidant gas comprises oxygen and the amounts of feed, $H_2O$ and oxygen introduced into said first catalyst zone (442a) are controlled to maintain in said inlet stream an $H_2O$ to C ratio of from about 0.5 to 5 and an $O_2$ to C ratio of from about 0.4 to about 0.65, and wherein the effluent of said second catalyst zone (442b) comprises a gas mixture which includes hydrogen,

carbon monoxide and carbon dioxide and is passed to a carbon dioxide removal zone (448) in which carbon dioxide is separated therefrom, the separated carbon dioxide is recycled to said inlet stream (440) in an amount sufficient so that said inlet stream comprises from about 5 to 20 mole percent carbon dioxide; and the carbon dioxide-depleted effluent of said second catalyst zone (442b) is obtained as a synthesis gas comprising hydrogen and carbon oxides.

**23.** The process of claim 22 further characterized in that normally liquid hydrocarbons are synthesized from said synthesis gas comprising hydrogen and carbon oxides by passing said synthesis gas to a hydrocarbon synthesis reactor (458) in which CO and $H_2$ are reacted to form hydrocarbons of different molecular weight, including normally liquid hydrocarbons, separating the resulting hydrocarbons into product and by-product streams, and recycling the resulting by-product stream of hydrocarbons to said inlet stream (440) as a part of said hydrocarbon feed and withdrawing the product stream of hydrocarbons.

**24.** The process of claim 23 further characterized in that the preheat temperature is from about 427° to 760° C and the process is carried out at superatmospheric pressure.

**25.** The process of claim 23 further characterized in that said first catalyst zone (442a) is maintained at a temperature from about 954° to 1316° C and the first zone effluent is introduced into said second catalyst (442b) zone at substantially a temperature of from about 954° to 1316° C.

**26.** The process of claim 1 or claim 7 wherein the catalytically effective metals of the first catalyst zone comprise 10 to 90% by weight, preferably 25 to 75% by weight palladium, and 90 to 10% by weight, preferably 75 to 25% by weight platinum.

**27.** The process of claim 26 wherein the catalytically effective metals of the second catalyst zone comprise 90 to 10% by weight, preferably 80 to 60% by weight platinum and 10 to 90% by weight, preferably 20 to 40% by weight rhodium.

**28.** The process of claim 26 wherein the catalytically effective metals of the first catalyst zone comprise 60 to 40% by weight palladium and 40 to 60% by weight platinum.

**Revendications**

**1.** Un procédé pour la production d'un gaz riche en hydrogène en chauffant au préalable une vapeur d'admission comportant une charge hydrocarbonée, $H_2O$ et un gaz oxydant renfermant de l'oxygène à une température de préchauffage au moins suffisamment élevée pour faire débuter l'oxydation catalytique de la charge hydrocarbonée préférée et en introduisant la vapeur d'admission préchauffée dans une première zone catalytique (24a) afin d'y réaliser une oxydation catalytique partielle, caractérisé en ce que :

(a) la première zone catalytique comprend un corps monolithique (27) présentant une pluralité de passages traversant l'écoulement du gaz, présentant une quantité efficace du point de vue catalytique de composants catalytiques du palladium et du platine, y dispersés, et les quantités de charge hydrocarbonée, de $H_2O$ et d'oxygène introduites dans la première zone catalytique sont contrôlées pour maintenir dans la vapeur d'admission un rapport $H_2O$ à C d'au moins environ 0,5 et un rapport $O_2$ à C d'au moins environ 0,2, mais inférieur à la quantité stoechiométrique d'oxygène nécessaire pour oxyder tout le carbone de la charge en $CO_2$.

(b) la vapeur d'admission préchauffée est mise en contact dans ladite première zone catalytique (24a) avec le palladium et le constituant du platine catalytique sur le monolithe (27) pour y faire débuter et maintenir l'oxydation catalytique d'au moins une quantité suffisante de charge hydrocarbure pour atteindre une température élevée dans ladite première zone catalytique (24a), cette température étant au moins suffisamment élevée pour craquer les hydrocarbures en $C_3$ ou supérieure non oxydés, s'ils sont présents, en hydrocarbures légers pas plus lourds que des hydrocarbures en $C_4$, la température d'au moins une partie dudit corps monolithique (27) étant au moins supérieure d'environ 121° C a la température d'inflammation dudit courant d'admission, de façon à former un effluent de la première zone catalytique, renfermant, de façon prédominante, de l'hydrogène, des oxydes de carbone et lesdits hydrocarbures légers précités ; et

(c) l'effluent de la première zone catalytique est prélevé sous la forme d'un gaz riche en hydrogène.

2. Le procédé de la revendication 1, caractérisé en outre en ce que la charge hydrocarbonée est une charge hydrocarbure et la température élevée atteinte au stade (b) est suffisamment élevée pour reformer à la vapeur par voie catalytique des hydrocarbures restant dans l'effluent de la première zone catalytique sans qu'il soit nécessaire d'appliquer une chaleur extérieure.

3. Le procédé de la revendication 1 ou de la revendication 2, caractérisé en outre en ce que ladite première zone catalytique (24a) comporte des constituants catalytiques à base de palladium, de platine et, facultativement, de rhodium, étendus sur une couche support réfractaire en oxyde métallique, supportée sur ledit corps monolithique.

4. Le procédé de la revendication 3, caractérisé en outre en ce que un débit volumétrique horaire d'au moins 100 000 volumes de quantités passées par volume de catalyseur est maintenu dans la première zone catalytique (24a).

5. Le procédé de la revendication 1 ou de la revendication 2, caractérisé en outre en ce que les quantités de charge d'hydrocarbure, de $H_2O$ et d'oxygène introduites dans ladite la première zone catalytique (24a) sont contrôlées pour y procurer un rapport de $H_2O$ à C d'environ 0,5 à 5 et un rapport $O_2$ à C d'environ 0,2 à 0,8.

6. Le procédé de la revendication 1 ou de la revendication 2, caractérisé en outre en ce que le procédé est mis en oeuvre à une température entre environ la température atmosphérique jusqu'à 142 kg/cm$^2$.

7. Le procédé de la revendication 1 ou de la revendication 2, caractérisé en outre en ce que l'effluent de la première zone catatlytique, alors qu'il se trouve à une température élevée, est transféré de la première zone catalytique (24a) à une seconde zone catalytique (24b) renfermant un catalyseur de reformage à la vapeur à base de métaux du groupe du platine (31) et est contacté dans ladite seconde zone catalytique (24b) avec ledit catalyseur de reformage à la vapeur (31) afin de faire réagir les hydrocarbures dans ladite première zone catalytique avec $H_2O$ pour obtenir de l'hydrogène et des oxydes de carbone, et l'effluent de la seconde zone catalytique (24b) est prélevé sous la forme d'un gaz riche en hydrogène.

8. Le procédé de la revendication 7, caractérisé en outre en ce qu'un débit volumétrique horaire d'au moins 100 000 volumes de produit passé par volume de catalyseur est maintenu dans ladite première zone catalytique (24a) et qu'un débit volumétrique horaire d'environ 2000 à 20000 volumes de produit passé par volume de catalyseur est maintenu dans ladite seconde zone catalytique (24b).

9. Le procédé de la revendication 8, caractérisé en outre en ce que le procédé est mis en oeuvre à une pression entre environ la pression atmosphérique jusqu'à 142 kg/cm$^2$.

10. Le procédé de la revendication 2, caractérisé en outre en ce que ledit gaz oxydant comporte de l'air enrichi en oxygène et dans lequel les quantités de charge, de $H_2O$ et d'oxygène introduites dans ladite première zone catalytique (24a) sont contrôlées pour maintenir dans ledit courant d'admission un rapport $H_2O$ à C d'environ 0,5 à 5 et rapport de $O_2$ à C d'environ 0,35 à 0,65 et ledit effluent de ladite seconde zone catalytique (24b) comporte un gaz de synthèse qui est refroidi, le monoxyde de carbone dans ledit gaz de synthyèse refroidi est mis à réagir avec $H_2O$ pour obtenir de l'hydrogène ; on élimine les composés renfermant du soufre et $H_2O$ dudit gaz de synthèse ; on fait passer ledit gaz de synthèse dans une boucle de synthèse d'ammoniac (286, 290, 292, 298) afin de faire réagir l'hydrogène sur un catalyseur de synthèse d'ammoniac dans des conditions de synthèse de l'ammoniac ; et l'ammoniac est évacué sous forme de produits à partir de la boucle de synthèse d'ammoniac.

11. Le procédé de la revendication 10, caractérisé en outre en ce ladite charge hydrocarbonée est une charge d'hydrocarbures, l'air dans le courant d'admission (240) est enrichi jusqu'à au moins 33 %, de préférence environ 33 à 50 % par volume d'oxygène et la température de préchauffage est d'environ 427 à 760° C.

12. Le procédé de la revendication 11, caractérisé en outre en ce que les quantités de charge de $H_2O$,

d'air et d'oxygène introduit dans ladite première zone catalytique (24a) sont contrôlées pour maintenir dans ledit courant d'admission (240) un rapport de $H_2O$ à C d'environ 1 à 4, et un rapport de $O_2$ à C d'environ 0,5 à 0,6, et que le procédé est mis en oeuvre à une pression supérieure à l'atmosphérique.

**13.** Le procédé de la revendication 11, caractérisé en outre en ce que ladite première zone catalytique (242a) est maintenue à une température d'environ 954° à 1316° C et que l'effluent de la première zone catalytique est introduit dans ladite seconde zone catalytique (242b) essentiellement à une température d'environ 954° à 1316° C.

**14.** Le procédé de la revendication 2, caractérisé en outre en ce que ledit gaz oxydant comprend de l'oxygène et que les quantités de charge, de $H_2O$ et d'oxygène introduit dans ladite première zone catalytique (142a) sont contrôlées pour maintenir dans le courant d'admission (136) un rapport de $H_2O$ à C d'environ 0,5 à 3 et un rapport de $O_2$ à C d'environ 0,35 à 0,65, et que ledit effluent de ladite seconde zone catalytique comprend un gaz de synthèse, le gaz de synthèse est refroidi et les composés renfermant du soufre et $H_2O$ en sont éliminés ; ledit gaz de synthèse est passé par une boucle de synthèse du méthanol (148, 150, 154, 156, 160, 166) afin de faire réagir l'hydrogène avec les oxydes de carbone sur un catalyseur de synthèse du méthanol dans des conditions de synthèse du méthanol, et le méthanol est évacué comme produit de ladite boucle de synthèse du méthanol.

**15.** Le procédé de la revendication 14, caractérisé en outre en ce que la charge hydrocarbonée est une charge d'hydrocarbures et que la température de préchauffage est d'environ 472 à 7609° C.

**16.** Le procédé de la revendication 15, caractérisé en outre en ce que les quantités de charge, de $H_2O$ et d'oxygène, introduites dans ladite première zone catalytique (142a) sont contrôlées pour maintenir dans ledit courant d'amenée (139) un rapport de $H_2O$ à C d'environ 1 à 2,5 et un rapport de $O_2$ à C d'environ 0,5 à 0,6, et que le procédé est mis en oeuvre à une pression supérieure à l'atmosphérique.

**17.** Le procédé de la revendication 15, caractérisé en outre en ce que ladite première zone catalytique est maintenue à une température d'environ 954° à 1316° C et que l'effluent de la première zone est introduit dans ladite seconde zone catalytique pratiquement à une température d'environ 954 à 1316° C.

**18.** Le procédé de la revendication 1, caractérisé en outre en ce que ladite charge hydrocarbonée comprend le sous-produit à base d'hydrocarbure liquide d'une technique de gazéification du charbon dans laquelle le charbon est mis à réagir avec de la vapeur et de l'oxygène afin d'obtenir (i) un gaz de synthèse de gazéificateur qui est soumis à une méthanisation afin d'obtenir un gaz naturel de synthèse et (ii) ledit sous-produit à base d'hydrocarbure liquide, et dans lequel ledit courant d'admission est préchauffé à une température inférieure à environ 649° C, et la température d'au moins une partie dudit monolithe (27) est au moins supérieure d'environ 139° C à la température de combustion dudit courant d'admission, mais ne dépasse pas environ 1093° C, ledit gaz oxydant comprend de l'oxygène et les quantités de sous-produit à base d'hydrocarbure liquide, de $H_2O$ et d'oxygène, introduites dans ladite première zone catalytique seront contrôlées pour maintenir dans ledit courant d'admission (378) un rapport de $H_2O$ à C d'environ 0,5 à 5 et un rapport de $O_2$ à C d'environ 0,15 à 0,4, de façon à produire un effluent de la première zone catalytique, comportant principalement du méthane, de l'hydrogène, du monoxyde de carbone, du dioxyde de carbone, $H_2O$ et des hydrocarbures en $C_2$ à $C_4$ ; dans laquel ledit effluent est transféré dans une zone de traitement (384, 342) pour en éliminer le dioxyde de carbone et l'eau ; l'effluent de la première zone catalytique ainsi traitée est évacué sous forme de gaz de synthèse ; et ledit gaz de synthèse du gazéificateur et ledit gaz de synthèse secondaire sont soumis à une méthanation dans une zone de méthanation (90) afin d'obtenir un gaz naturel de synthèse.

**19.** Le procédé de la revendication 18, caractérisé en outre en ce que l'effluent de ladite première zone catalytique, pendant qu'il est encore à une température élevée, est transféré de ladite première zone catalytique (380a) à une seconde zone catalytique (380b) renfermant un catalyseur de reformage à la vapeur, et que l'effluent de la première zone catalytique est amené au contact de ladite seconde zone catalytique (380b) comportant ledit catalyseur de reformage à la vapeur (31) afin d'y faire réagir les hydrocarbures avec $H_2O$ pour obtenir de l'hydrogène et des oxydes de carbone, et ensuite on transfère l'effluent de ladite seconde zone catalytique, en tant que dit effluent, à ladite zone de traitement (384,

342).

**20.** Le procédé de la revendication 19, caractérisé en outre en ce que la température de préchauffage est d'environ 427 à 649 °C.

**21.** Le procédé de la revendication 19, caractérisé en outre en ce que ladite première zone catalytique (380a) est maintenue à une température d'environ 760 à 1093 °C et que l'effluent de ladite première zone catalytique est introduit dans ladite seconde zone catalytique (380b), essentiellement à une température d'environ 760 à 1093 °C.

**22.** Le procédé de la revendication 2, caractérisé en outre en ce que ladite charge hydrocarbonée est une charge d'hydrocarbure normalement gazeux, ledit gaz oxydant comprend de l'oxygène et les quantités de charge, de $H_2O$ et d'oxygène introduites dans ladite première zone catalytique (442a) sont contrôlées pour maintenir dans ledit courant d'admission un rapport de $H_2O$ à C d'environ 0,5 à 5 et un rapport de $O_2$ à C d'environ 0,4 à environ 0,5, et dans lequel l'effluent de ladite seconde zone catalytique (442b) comprend un mélange gazeux qui renferme de l'hydrogène, du monoxyde de carbone et du dioxyde de carbone et est transféré dans une zone d'évacuation du dioxyde de carbone (448) dans laquelle on en sépare le dioxyde de carbone, le dioxyde de carbone séparé est recyclé dans ledit courant d'admission (440) en une quantité suffisante pour que ledit courant d'admission comporte d'environ 5 à 20 mole % de dioxyde de carbone ; et l'effluent dépourvu de dioxyde de carbone, de ladite seconde zone catalytique (442b) est obtenu sous la forme d'un gaz de synthèse comportant de l'hydrogène et des oxydes de carbone.

**23.** Le procédé de la revendication 22, caractérisé en outre en ce que l'on synthétise des hydrocarbures normalement liquides à partir dudit gaz de synthèse comportant de l'hydrogène et des oxydes de carbone en transférant ledit gaz de synthèse dans un réacteur de synthèse pour hydrocarbure (458) dans lequel CO et $H_2$ sont mis à réagir pour former des hydrocarbures de différents poids moléculaires, y compris des hydrocarbure normalement liquides, en séparant les hydrocarbures obtenus en courants de produits et de sous-produits, et en recyclant le courant de sous-produit obtenu d'hydrocarbures dans ledit courant d'admission (440) en tant qu'une partie de ladite charge d'hydrocarbures puis en évacuant le courant obtenu d'hydrocarbures.

**24.** Le procédé de la revendication 23, caractérisé en outre en ce que la température de préchauffage est d'environ 427° à 760 °C et que le procédé est mis en oeuvre à une pression supérieure à l'atmosphérique.

**25.** Le procédé de la revendication 23, caractérisé en outre en ce que ladite première zone catalytique (442a) est maintenue à une température d'environ 954° à 1316 °C et que l'effluent de la première zone est introduit dans ladite seconde zone catalytique (442b) essentiellement à une température d'environ 954° à 1316 °C.

**26.** Le procédé de la revendication 1 ou de la revendication 7, dans lequel les métaux performants du point de vue catalytique de la première zone de catalyseur comportent de 10 à 90 % en poids, de préférence 25 à 75 % en poids de palladium, et de 90 à 10 % en poids, de préférence de 75 à 25 % en poids de platine.

**27.** Le procédé de la revendication 26, dans lequel les métaux performants du point de vue catalytique de la seconde zone catalytique comprennent 90 à 10 % en poids, de préférence 80 à 60 % de platine et de 10 à 90 % en poids, de préférence 20 à 40 % en poids de rhodium.

**28.** Le procédé de la revendication 26, dans lequel les métaux performants du point de vue catalytique de la première zone catalytique comportent de 60 à 40 % en poids de palladium et de 40 à 60 % en poids de platine.

## Ansprüche

**1.** Verfahren zur Herstellung eins wasserstoffreichen Gases durch Vorerhitzen eines eine kohlenwasser-

stoffhältige Beschickung, $H_2O$ und ein sauerstoffhältiges, oxidierendes Gas umfassenden Einlaßstromes auf eine Vorerhitzungstemperatur, welche wenigstens ausreichend hoch ist, um eine katalytische Oxidation der kohlenwasserstoffhältigen Beschickung einzuleiten, und Einführen des vorerhitzten Einlaßstromes in eine erste Katalysatorzone (24a), um in derselben eine teilweise Katalytische Oxidation durchzuführen, dadurch gekennzeichnet, daß:

(a) die erste Katalysatorzone (24a) einen monolithischen Körper (27) umfaßt, der eine Mehrzahl von sich durch den monolithischen Körper erstreckenden Gasströmungskanälen aufweist, und der in dem monolithischen Körper dispergiert eine katalytisch wirksame Menge von Katalytischen Komponenten auf der Basis von Palladium und Platin aufweist, wobei die Mengen der kohlenwasserstoffhältigen Beschickung, des $H_2O$ und des Sauerstoffs, die in die erste Katalysatorzone (24a) eingeführt werden, derart geregelt werden, daß in dem Einlaßstrom ein Verhältnis von $H_2O$ zu C von wenigstens etwa 0,5, und ein Verhältnis von $O_2$ zu C von wenigstens etwa 0,2, aufrechterhalten werden, wobei dieses letztgenannte Verhältnis jedoch kleiner als die stöchiometrische Menge an Sauerstoff ist, welche notwendig ist, um den gesamten Kohlenstoff in der Beschickung zu $CO_2$ zu oxidieren;

(b) der vorerhitzte Einlaßstrom in der ersten Katalysatorzone (24a) mit den katalytischen Komponenten auf der Basis von Palladium und Platin auf dem Monolithen (27) in Berührung gebracht wird, um in dieser ersten Katalysatorzone (24a) die katalytische Oxidation von wenigstens einer ausreichenden Menge der Kohlenwasserstoffbeschickung einzuleiten und aufrechtzuerhalten, welche Menge ausreicht, um in der ersten Katalysatorzone (24a) eine erhöhte Temperatur zu erreichen, welche wenigstens hoch genug ist, um nicht oxidierte $C_5$-Kohlenwasserstoffe oder noch schwerere Kohlenwasserstoffe, falls solche vorhanden sind, zu leichteren Kohlenwasserstoffen zu kracken, welche nicht schwerer als $C_4$-Kohlenwasserstoffe sind, wobei die Temperatur von wenigstens einem Teil des monolithischen Körpers (27) wenigstens um etwa 121 °C höher als die Zündtemperatur des Einlaßstromes ist, wodurch ein aus der ersten Katalysatorzone austretendes Gemisch erzeugt wird, welches überwiegend aus Wasserstoff, Kohlenoxiden und den leichten Kohlenwasserstoffen besteht; und

(c) das aus der ersten Katalysatorzone austretende Gemisch als ein wasserstoffreiches Gas abgezogen wird.

**2.** Verfahren nach Anspruch 1, welches weiterhin dadurch gekennzeichnet ist, daß die kohlenwasserstoffhältige Beschickung eine Kohlenwasserstoffbeschickung ist, und daß die in der Stufe (b) erreichte, erhöhte Temperatur hoch genug ist, um die in dem aus der ersten Katalysatorzone austretenden Gemische verbleibenden Kohlenwasserstoffe katalytisch mit Wasserdampf zu reformieren, ohne daß die Notwendigkeit bestünde, dabei von außen Wärme zuzuführen.

**3.** Verfahren nach Anspruch 1 oder 2, welches weiterhin dadurch gekennzeichnet ist, daß die erste Katalysatorzone (24a) katalytische Komponenten auf der Basis von Palladium, Platin und gegebenenfalls Rhodium umfaßt, welche auf einer Trägerschicht aus einem feuerfesten Metalloxid ausgezogen sind, welche Trägerschicht ihrerseits auf dem monolithischen Körper aufgebracht ist.

**4.** Verfahren nach Anspruch 3, welches weiterhin dadurch gekennzeichnet ist, daß eine volumetrische stündliche Durchsatzrate von wenigstens 100.000 Volumensanteilen an Durchsatz je Volumensanteil des Katalysators in der ersten Katalysatorzone (24a) aufrechterhalten wird.

**5.** Verfahren nach Anspruch 1 oder 2, welches weiterhin dadurch gekennzeichnet ist, daß die in die erste Katalysatorzone (24a) eingeführten Mengen an kohlenwasserstoffhältiger Beschickung, $H_2O$ und Sauerstoff derart geregelt werden, daß darin ein Verhältnis von $H_2O$ zu C von etwa 0,5 bis 5, und ein Verhältnis von $O_2$ zu C von etwa 0,2 bis 0,8, geschaffen werden.

**6.** Verfahren nach Anspruch 1 oder 2, welches weiterhin dadurch gekennzeichnet ist, daß das Verfahren bei einem Druck von etwa Atmosphärendruck bis zu 142 $kg/cm^2$ durchgeführt wird.

**7.** Verfahren nach Anspruch 1 oder 2, welches weiterhin dadurch gekennzeichnet ist, daß das aus der ersten Katalysatorzone austretende Gemisch,während es sich auf einer erhöhten Temperatur befindet, aus dieser ersten Katalysatorzone (24a) in eine zweite Katalysatorzone (24b) geführt wird, in welcher ein Katalysator (31) aus einem Metall der Platingruppe für das Reformieren mit Wasserdampf enthalten ist, und in dieser zweiten Katalysatorzone (24b) mit diesem Katalysator (31) für das Reformieren mit

Wasserdampf in Berührung gebracht wird, um die Kohlenwasserstoffe in dem aus der ersten Katalysatorzone austretenden Gemisch mit $H_2O$ unter Bildung von Wasserstoff und Kohlenoxiden aus diesen Kohlenwasserstoffen umzusetzen, und daß das aus der zweiten Katalysatorzone (24b) austretende Gemisch als ein wasserstoffreiches Gas abgezogen wird.

**8.** Verfahren nach Anspruch 7, welches weiterhin dadurch gekennzeichnet ist, daß eine volumetrische stündliche Durchsatzrate von wenigstens 100.000 Volumensanteilen an Durchsatz je Volumensanteil des Katalysators in der ersten Katalysatorzone (24a) aufrechterhalten wird, und daß eine volumetrische stündliche Durchsatzrate von etwa 2.000 bis 20.000 Volumensanteilen an Durchsatz je Volumensanteil des Katalysators in der zweiten Katalysatorzone (24b) aufrechterhalten wird.

**9.** Verfahren nach Anspruch 8, welches weiterhin dadurch gekennzeichnet ist, daß das Verfahren bei einem Druck von etwa Atmosphärendruck bis zu 142 $kg/cm^2$, durchgeführt wird.

**10.** Verfahren nach Anspruch 2, welches weiterhin dadurch gekennzeichnet ist, daß das oxidierende Gas aus mit Sauerstoff angereicherter Luft besteht, daß die Mengen an Beschickung, $H_2O$ und Sauerstoff, die in die erste Katalysatorzone (24a) eingeführt werden, derart geregelt werden, daß in dem Einlaßstrom ein Verhältnis von $H_2O$ zu C von etwa 0,5 bis 5, und ein Verhältnis von $O_2$ zu C von etwa 0,35 bis 0,65, aufrechterhalten werden, daß das aus der zweiten Katalysatorzone (24b) austretende Gemisch aus einem Synthesegas besteht, welches abgekühlt wird, daß das Kohlenmonoxid in dem abgekühlten Synthesegas mit $H_2O$ zur Bildung von Wasserstoff umgesetzt wird, daß schwefelhältige Verbindungen und $H_2O$ aus dem Synthesegas entfernt werden; daß das Synthesegas in eine Ammoniaksyntheseschleife (286, 290, 292, 298) eingeführt wird, um den Wasserstoff mit dem Stickstoff des Synthesegases über einem Katalysator für die Ammoniaksynthese und unter den Bedingungen einer Ammoniaksynthese umzusetzen; und daß das Ammoniak als Produkt aus der Ammoniaksyntheseschleife abgezogen wird.

**11.** Verfahren nach Anspruch 10, welches weiterhin dadurch gekennzeichnet ist, daß die kohlenwasserstoffhältige Beschickung eine Kohlenwasserstoffbeschickung ist, daß die Luft in dem Einlaßstrom (240) auf wenigstens etwa 33 Vol.-%, vorzugsweise etwa 33 bis 50 Vol.-%, an Sauerstoff angereichert ist, und daß die Vorerhitzungstemperatur etwa 427° bis 760°C beträgt.

**12.** Verfahren nach Anspruch 11, welches weiterhin dadurch gekennzeichnet ist, daß die in die erste Katalysatorzone (24a) eingeführten Mengen an Beschickung,$H_2O$, Luft und Sauerstoff derart geregelt werden, daß in dem Einlaßstrom (240) ein Verhältnis von $H_2O$ zu C von etwa 1 bis 4, und ein Verhältnis von $O_2$ zu C von etwa 0,5 bis 0,6, aufrechterhalten werden, und daß das Verfahren bei einem über dem Atmosphärendruck liegenden Druck durchgeführt wird.

**13.** Verfahren nach Anspruch 11, welches weiterhin dadurch gekennzeichnet ist, daß die erste Katalysatorzone (242a) auf einer Temperatur von etwa 954° bis 1.316°C gehalten wird, und daß das aus der ersten Katalysatorzone austretende Gemisch in die zweite Katalysatorzone (242b) bei im wesentlichen einer Temperatur von etwa 954° bis 1.316°C eingeführt wird.

**14.** Verfahren nach Anspruch 2, welches weiterhin dadurch gekennzeichnet ist, daß das oxidierende Gas aus Sauerstoff besteht, daß die in die erste Katalysatorzone (142a) eingeführten Mengen an Beschikkung, $H_2O$ und Sauerstoff derart geregelt werden, daß in dem Einlaßstrom (136) ein Verhältnis von $H_2O$ zu C von etwa 0,5 bis 3, sowie ein Verhältnis von $O_2$ zu C von etwa 0,35 bis 0,65, aufrechterhalten werden, daß das aus der zweiten Katalysatorzone austretende Gemisch aus einem Synthesegas besteht, daß das Synthesegas gekühlt wird, daß aus dem Synthesegas die schwefelhältigen Verbindungen und $H_2O$ entfernt werden; daß dieses Synthesegas in eine Methanolsyntheseschleife (148, 150, 154, 156, 160, 166) eingeführt wird, um den Wasserstoff mit Kohlenoxiden des Synthesegases über einem Methanolsynthesekatalysator und unter den Bedingungen einer Methanolsynthese umzusetzen; und daß das Methanol als Produkt aus der Methanolsyntheseschleife abgezogen wird.

**15.** Verfahren nach Anspruch 14, welches weiterhin dadurch gekennzeichnet ist, daß die kohlenwasserstoffhältige Beschickung eine Kohlenwasserstoffbeschickung ist, und daß die Vorerhitzungstemperatur etwa 472° bis 760°C beträgt.

16. Verfahren nach Anspruch 15, welches weiterhin dadurch gekennzeichnet ist, daß die in die erste Katalysatorzone (142a) eingeführten Mengen an Beschickung, $H_2O$ und Sauerstoff derart geregelt werden, daß in dem Einlaßstrom (136) ein Verhältnis von $H_2O$ zu C von etwa 1 bis 2,5, und ein Verhältnis von $O_2$ zu C von etwa 0,5 bis 0,6, aufrechterhalten werden, und daß das Verfahren bei einem über dem Atmosphärendruck liegenden Druck durchgeführt wird.

17. Verfahren nach Anspruch 15, welches weiterhin dadurch gekennzeichnet ist, daß die erste Katalysatorzone auf einer Temperatur von etwa 954° bis 1.316° C gehalten wird, und daß das aus der ersten Zone austretende Gemisch in die zweite Katalysatorzone bei im wesentlichen einer Temperatur von etwa 954° bis 1.316° C eingeführt wird.

18. Verfahren nach Anspruch 1, welches weiterhin dadurch gekennzeichnet ist, daß die kohlenwasserstoffhältige Beschickung das flüssige Kohlenwasserstoffnebenprodukt eines Kohlevergasungsverfahrens darstellt, bei welchem die Kohle mit Wasserdampf und Sauerstoff unter Bildung
(i) eines Vergasungssynthesegases, welches unter Bildung eines Synthesenaturgases methaniert wird, und
(ii) des flüssigen Kohlenwasserstoffnebenproduktes umgesetzt wird; daß der Einlaßstrom auf eine Temperatur von weniger als etwa 649° C vorerhitzt wird, daß die Temperatur von wenigstens einem Teil des Monolithen (27) um wenigstens etwa 139° C höher als die Zündtemperatur des Einlaßstromes ist, aber nicht mehr als etwa 1.093° C beträgt, daß das oxidierende Gas Sauerstoff umfaßt, daß die in die erste Katalysatorzone eingeführten Mengen an flüssigem Kohlenwasserstoffnebenprodukt, $H_2O$ und Sauerstoff derart geregelt werden, daß in dem Einlaßstrom (378) ein Verhältnis von $H_2O$ zu C von etwa 0,5 bis 5, und ein Verhältnis von $O_2$ zu C von etwa 0,15 bis 0,4, aufrechterhalten werden, wodurch ein aus der ersten Katalysatorzone austretendes Gemisch erzeugt wird, welches in erster Linie aus Methan, Wasserstoff, Kohlenmonoxid, Kohlendioxid, $H_2O$ und $C_2$-$C_4$-Kohlenwasserstoffen besteht; daß das aus der ersten Katalysatorzone austretende Gemisch in eine Behandlungszone (384, 342) zum Entfernen des Kohlendioxides und Wassers aus dem Gemisch geführt wird; daß das so behandelte, aus der ersten Katalysatorzone ausgetretene Gemisch als ein sekundäres Synthesegas abgezogen wird; und daß das Vergasungssynthesegas und das sekundäre Synthesegas in einer Methanierungszone (390) zur Erzeugung eines Synthesenaturgases daraus methaniert werden.

19. Verrfahren nach Anspruch 18, welches weiterhin dadurch gekennzeichnet ist, daß das aus der ersten Katalysatorzone austretende Gemisch, während es sich noch auf einer erhöhten Temperatur befindet, aus der ersten Katalysatorzone (380a) in eine zweite Katalysatorzone (380b) geführt wird, innerhalb welcher ein Katalysator für das Reformieren mit Wasserdampf enthalten ist, daß das aus der ersten Katalysatorzone austretende Gemisch in der zweiten Katalysatorzone (380b) mit dem Katalysator (31) für das Reformieren mit Wasserdampf in Berührung gebracht wird, um die in dem Gemisch enthaltenen Kohlenwasserstoffe mit $H_2O$ umzusetzen und daraus Wasserstoff und Kohlenoxide zu erzeugen, und daß dann das aus der zweiten Katalysatorzone austretende Gemisch als ein solches Gemisch in die Behandlungszone (384, 342) eingeführt wird.

20. Verfahren nach Anspruch 19, welches weiterhin dadurch gekennzeichnet ist, daß die Vorerhitzungstemperatur etwa 427° bis 649° C beträgt.

21. Verfahren nach Anspruch 19, welches weiterhin dadurch gekennzeichnet ist, daß die erste Katalysatorzone (380a) auf einer Temperatur von etwa 760° bis 1.093° C gehalten wird, und daß das aus der ersten Katalysatorzone austretende Gemisch in die zweite Katalysatorzone (380b) bei im wesentlichen einer Temperatur von etwa 760° bis 1.093° C eingeführt wird.

22. Verfahren nach Anspruch 2, welches weiterhin dadurch gekennzeichnet ist, daß die kohlenwasserstoffhältige Beschickung eine Beschickung aus normalerweise gasförmigen Kohlenwasserstoffen ist,daß das oxidierende Gas aus Sauerstoff besteht, daß die in die erste Katalysatorzone (442a) eingeführten Mengen an Beschickung, $H_2O$ und Sauerstoff derart geregelt werden, daß in dem Einlaßstrom ein Verhältnis von $H_2O$ zu C von etwa 0,5 bis 5, und ein Verhältnis von $O_2$ zu C von etwa 0,4 bis etwa 0,65,aufrechterhalten werden, daß das aus der zweiten Katalysatorzone (442b) austretende Gemisch aus einem Gasgemisch besteht, welches Wasserstoff, Kohlenmonoxid und Kohlendioxid enthält, daß dieses Gemisch in eine Zone (448) zum Entfernen des Kohlendioxides geführt wird, in welcher das

Kohlendioxid von dem Gemisch abgetrennt wird, daß das abgetrennte Kohlendioxid in den Einlaßstrom (440) im Kreislauf rückgeführt wird, und zwar in einer Menge, welche ausreicht, damit der Einlaßstrom etwa 5 bis 20 Mol-% Kohlendioxid enthält; und daß das aus der zweiten Katalysatorzone (442b) ausgetretene, an Kohlendioxid abgereicherte Gemisch als ein Synthesegas erhalten wird, welches aus Wasserstoff und Kohlenoxiden besteht.

**23.** Verfahren nach Anspruch 22, welches weiterhin dadurch gekennzeichnet ist, daß aus dem aus Wasserstoff und Kohlenoxiden bestehenden Synthesegas normalerweise flüssige Kohlenwasserstoffe synthetisiert werden, indem das Synthesegas in einen Kohlenwasserstoffsynthesereaktor (458) geführt wird, in welchem CO und $H_2$ unter Bildung von Kohlenwasserstoffen unterschiedlichen Molekulargewichtes, darunter normalerweise flüssigen Kohlenwasserstoffen, miteinander umgesetzt werden, daß die so entstandenen Kohlenwasserstoffe in Produkt- und Nebenproduktströme getrennt werden, daß der entstandene Nebenproduktstrom aus Kohlenwasserstoffen in den Einlaßstrom (440) als ein Teil der Kohlenwasserstoffbeschickung in den Kreislauf rückgeführt wird, und daß der Produktstrom aus Kohlenwasserstoffen abgezogen wird.

**24.** Verfahren nach Anspruch 23, welches weiterhin dadurch gekennzeichnet ist, daß die Vorerhitzungstemperatur etwa 427° bis 760° C beträgt, und daß das Verfahren bei einem über dem Atmosphärendruck liegenden Druck durchgeführt wird.

**25.** Verfahren nach Anspruch 23, welches weiterhin dadurch gekennzeichnet ist, daß die erste Katalystorzone (442a) auf einer Temperatur von etwa 954° bis 1.316° C gehalten wird, und daß das aus der ersten Zone austretende Gemisch in die zweite Katalysatorzone (442b) bei im wesentlichen einer Temperatur von etwa 954° bis 1.316° eingeführt wird.

**26.** Verfahren nach Anspruch 1 oder 7, wobei die katalytisch wirksamen Metalle der ersten Katalysatorzone zu 10 bis 90 Gew.-%, vorzugsweise zu 25 bis 75 Gew.-%, aus Palladium, und zu 90 bis 10 Gew.-%, vorzugsweise 75 bis 25 Gew.-%, aus Platin bestehen.

**27.** Verfahren nach Anspruch 26, wobei die katalytisch wirksamen Metalle der zweiten Katalysatorzone zu 90 bis 10 Gew.-%, vorzugsweise zu 80 bis 60 Gew.-%, aus Platin, und zu 10 bis 90 Gew.-%, vorzugsweise zu 20 bis 40 Gew.-%, aus Rhodium bestehen.

**28.** Verfahren nach Anspruch 26, wobei die katalytisch wirksamen Metalle der ersten Katalysatorzone zu 60 bis 40 Gew.-% aus Palladium, und zu 40 bis 60 Gew.-% aus Platin, bestehen.

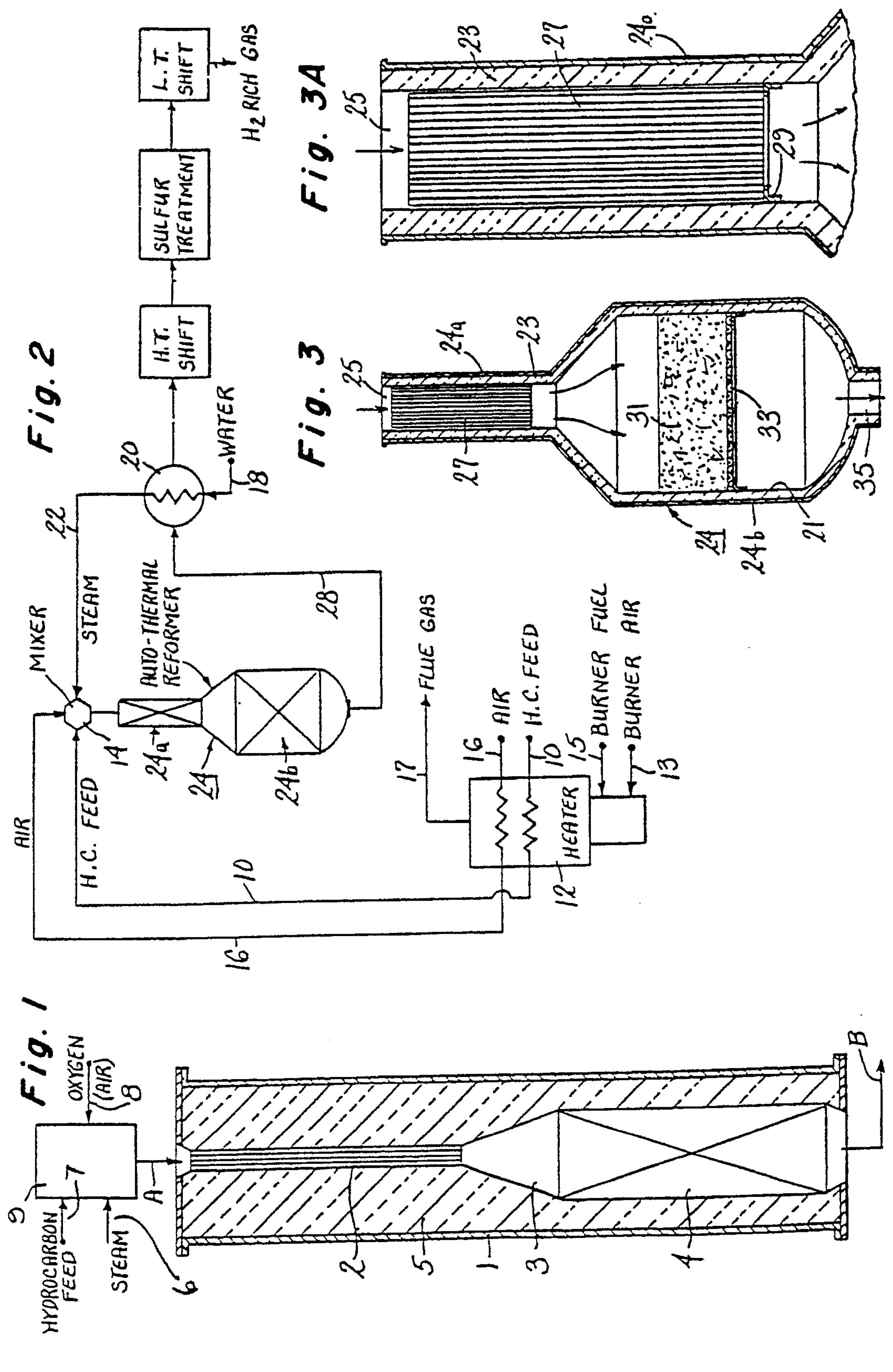
Fig. 1
HYDROCARBON FEED
STEAM
OXYGEN (AIR)
Fig. 2
AIR
H.C. FEED
MIXER
STEAM
AUTO-THERMAL REFORMER
FLUE GAS
AIR
H.C. FEED
BURNER FUEL
BURNER AIR
HEATER
WATER
H.T. SHIFT
SULFUR TREATMENT
L.T. SHIFT
H2 RICH GAS
Fig. 3
Fig. 3A

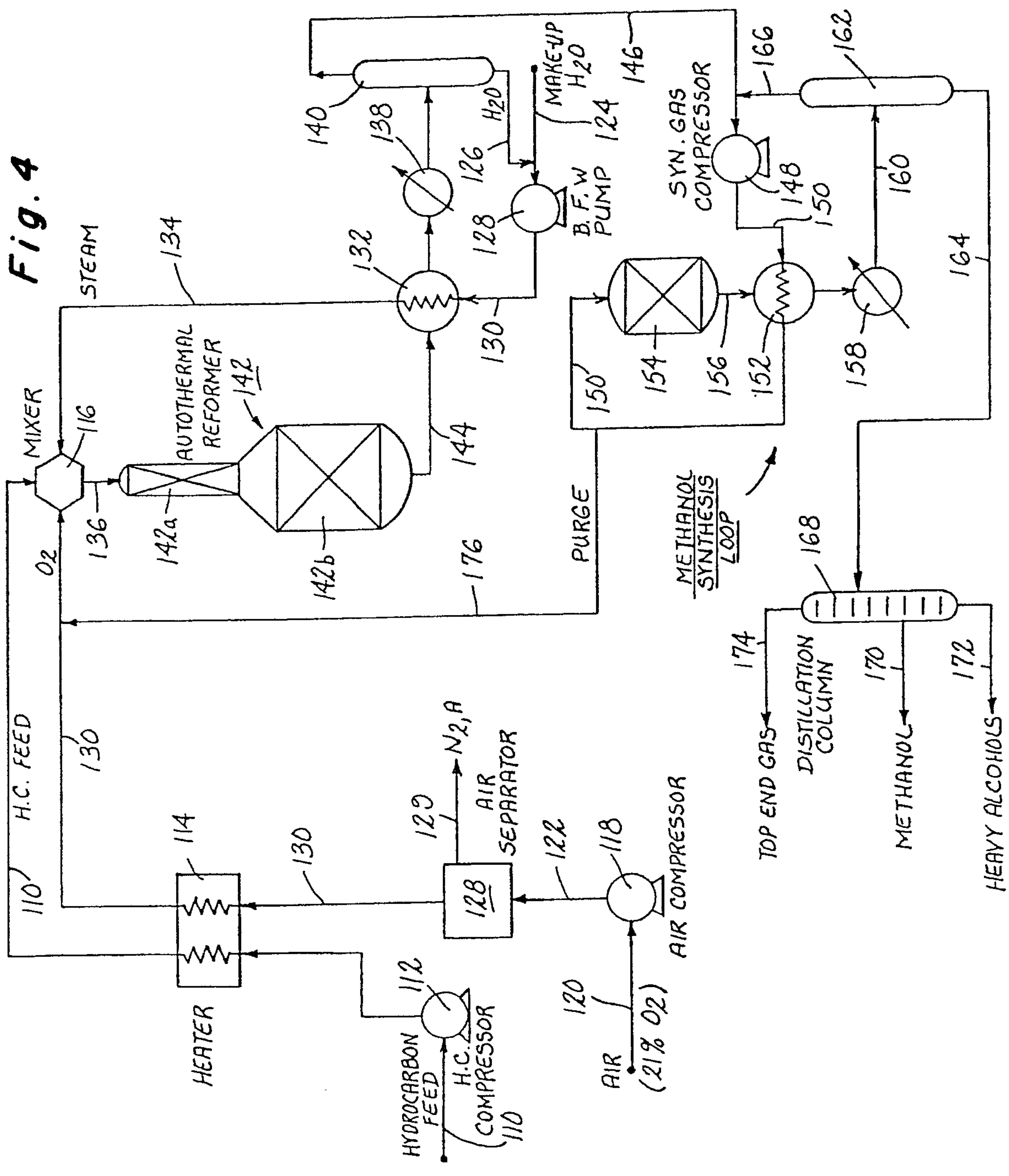
STEAM
134
132
138
140
MAKE-UP
$H_2O$
146
126
$H_2O$
124
128
B.F.W PUMP
130
SYN. GAS COMPRESSOR
148
150
166
162
160
164
MIXER
116
AUTOTHERMAL REFORMER
142
144
154
156
152
158
150
136
142a
142b
176
PURGE
METHANOL SYNTHESIS LOOP
168
O2
H.C. FEED
110
130
N2,A
129
AIR SEPARATOR
128
122
118
AIR COMPRESSOR
114
HEATER
112
HYDROCARBON FEED
H.C. COMPRESSOR
110
120
AIR
(21% O2)
174
TOP END GAS
DISTILLATION COLUMN
170
METHANOL
172
HEAVY ALCOHOLS

Fig. 4

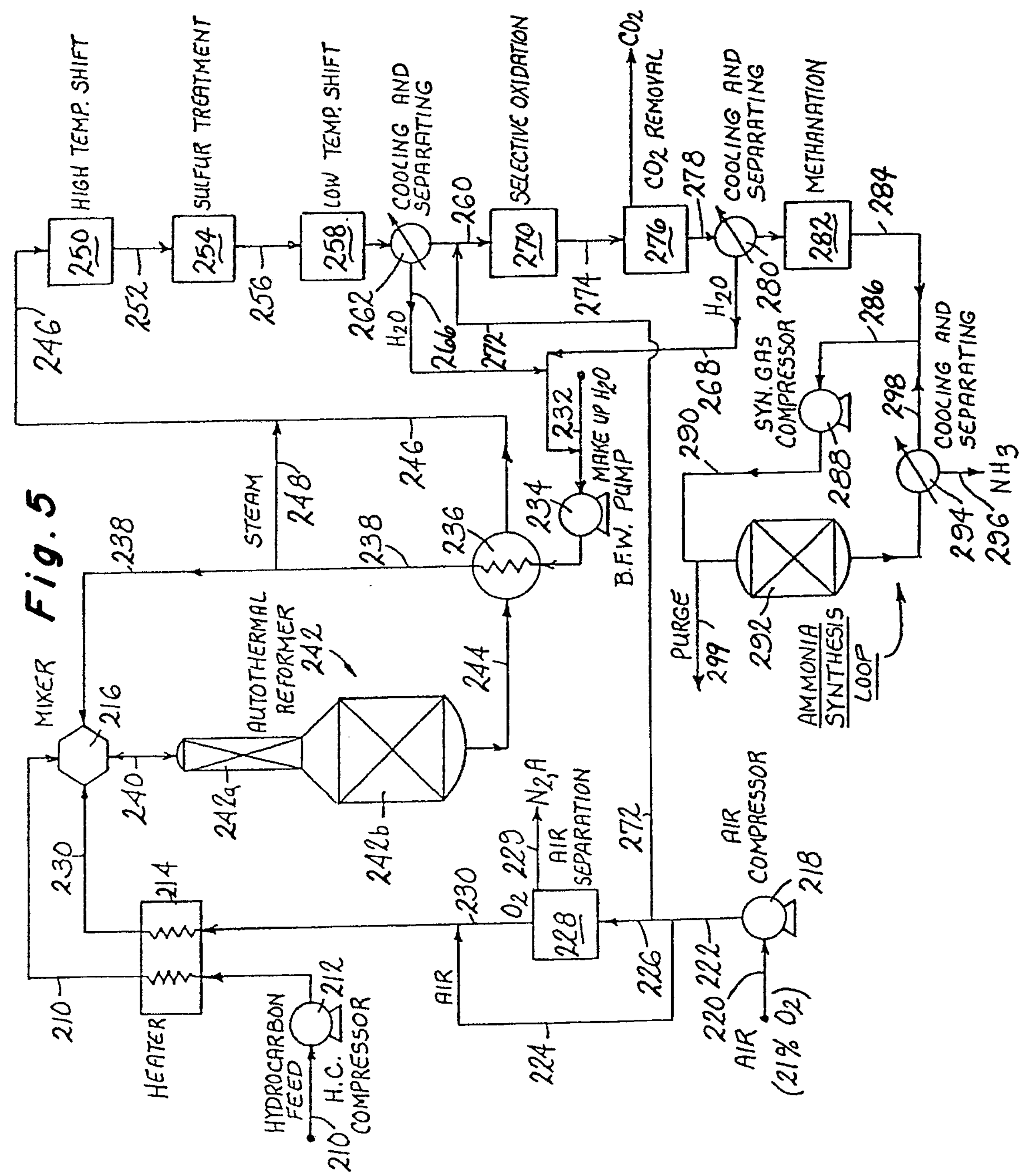
HIGH TEMP. SHIFT
SULFUR TREATMENT
LOW TEMP. SHIFT
COOLING AND SEPARATING
SELECTIVE OXIDATION
$CO_2$
$CO_2$ REMOVAL
COOLING AND SEPARATING
METHANATION
MIXER
AUTOTHERMAL REFORMER
STEAM
MAKE UP $H_2O$
B.F.W. PUMP
SYN. GAS COMPRESSOR
COOLING AND SEPARATING
$NH_3$
PURGE
AMMONIA SYNTHESIS LOOP
HEATER
HYDROCARBON FEED
H.C. COMPRESSOR
AIR
$O_2$
$N_2$, A
AIR SEPARATION
AIR COMPRESSOR
AIR (21% $O_2$)
$H_2O$
210
212
214
216
218
220
222
224
226
228
229
230
232
234
236
238
240
242
242a
242b
244
246
248
250
252
254
256
258
260
262
266
268
270
272
274
276
278
280
282
284
286
288
290
292
294
296
298
299
Fig. 5

Fig.6

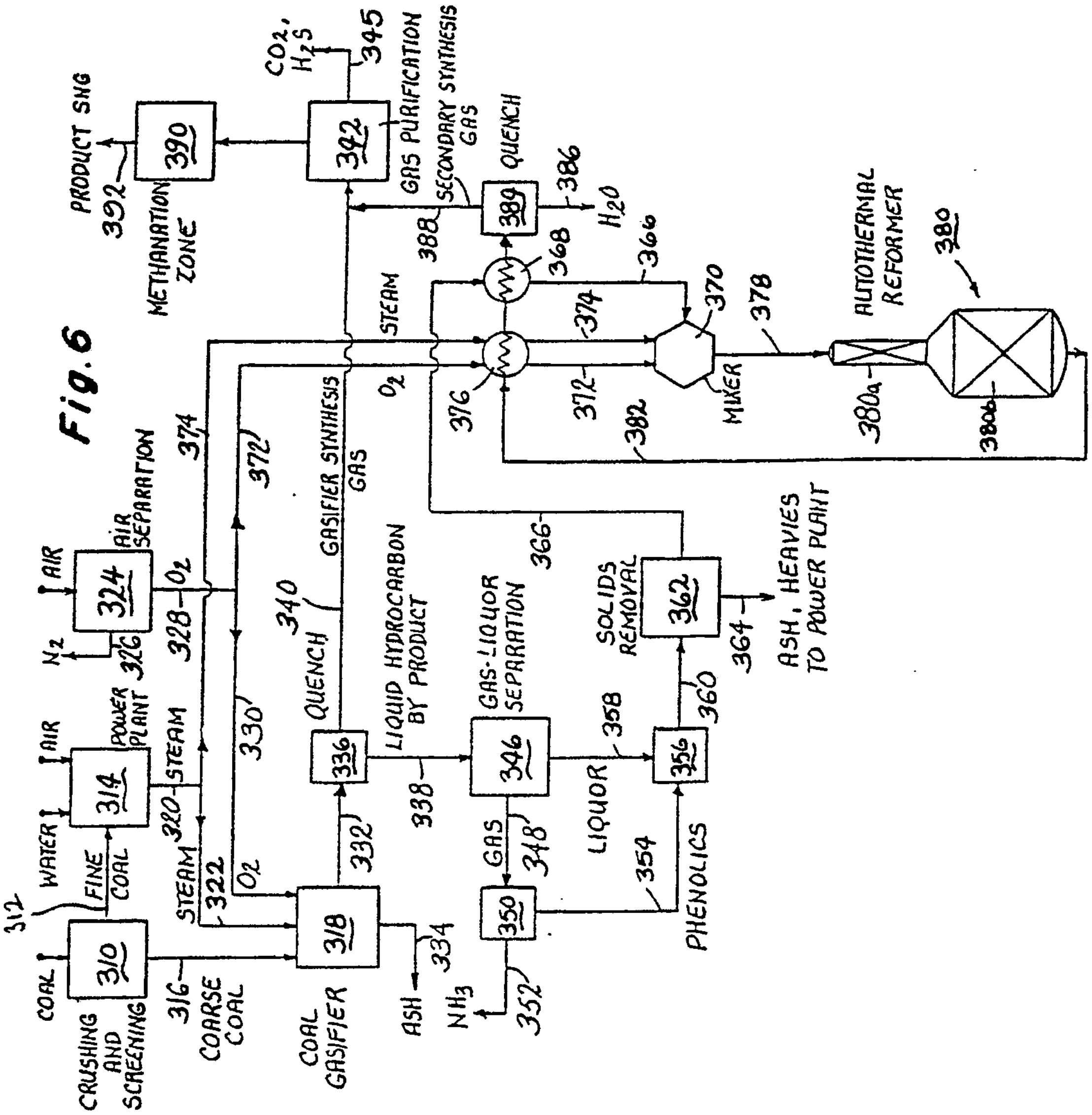
CRUSHING AND SCREENING
COAL
310
312
WATER
FINE COAL
AIR
314
POWER PLANT
316
COARSE COAL
STEAM
320
322
318
COAL GASIFIER
ASH
334
332
$O_2$
330
336
QUENCH
340
GASIFIER SYNTHESIS GAS
AIR
324
AIR SEPARATION
$N_2$
326
328
374
372
LIQUID HYDROCARBON BY PRODUCT
338
346
GAS-LIQUOR SEPARATION
GAS
348
350
$NH_3$
352
LIQUOR
354
PHENOLICS
356
358
360
362
SOLIDS REMOVAL
364
ASH, HEAVIES TO POWER PLANT
366
376
368
370
MIXER
378
382
380a
380b
AUTOTHERMAL REFORMER
380
388
389
QUENCH
386
$H_2O$
SECONDARY SYNTHESIS GAS
342
GAS PURIFICATION
$CO_2$, $H_2S$
345
390
METHANATION ZONE
392
PRODUCT SNG

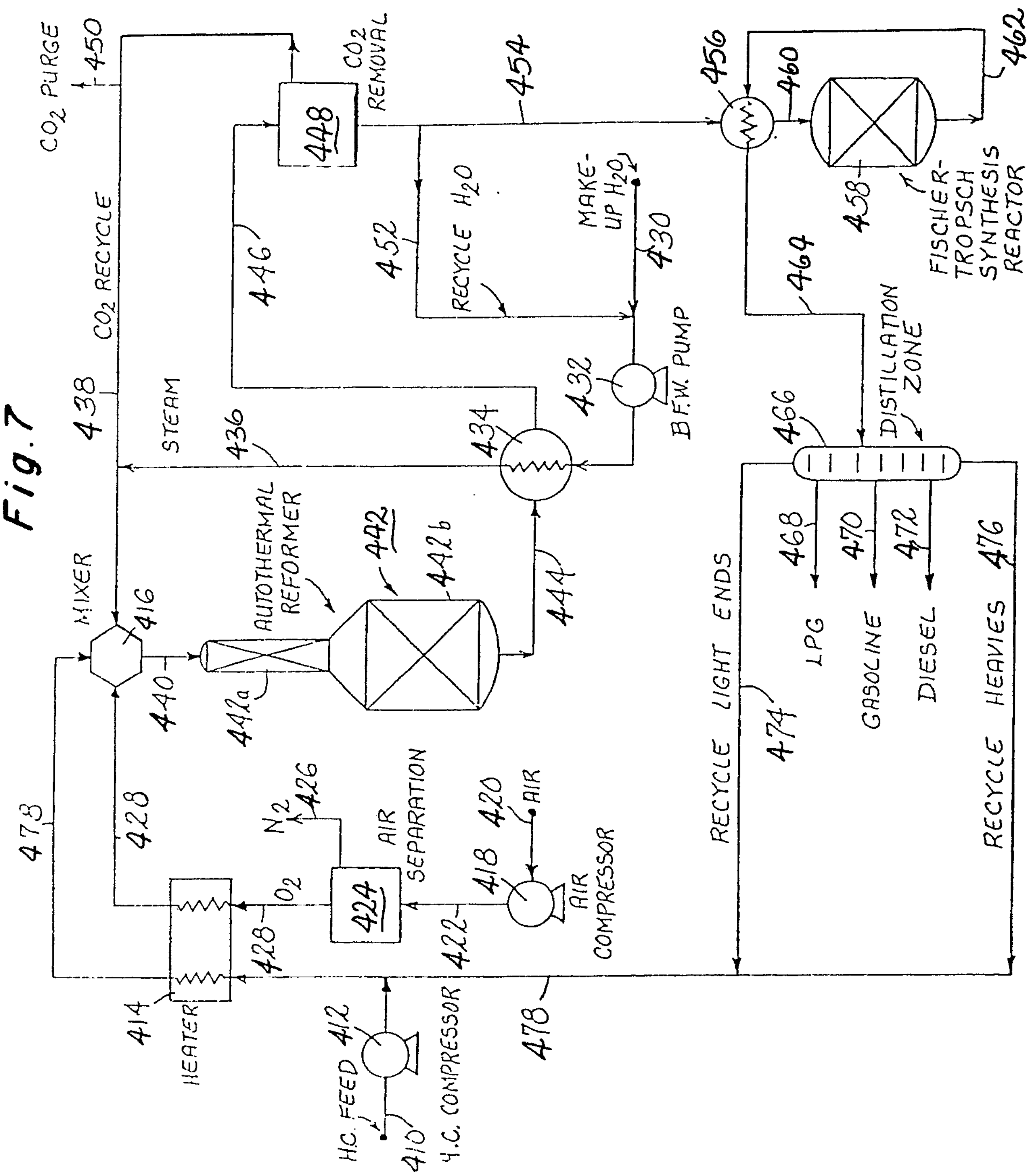
CO2 PURGE
450
CO2 REMOVAL
448
454
456
460
462
458
FISCHER-TROPSCH SYNTHESIS REACTOR
CO2 RECYCLE
446
452
RECYCLE H2O
MAKE-UP H2O
430
RECYCLE
464
438
STEAM
436
434
432
B.F.W. PUMP
466
DISTILLATION ZONE
MIXER
416
AUTOTHERMAL REFORMER
442
442b
444
468
470
472
476
RECYCLE LIGHT ENDS
LPG
GASOLINE
DIESEL
RECYCLE HEAVIES
440
442a
474
473
428
N2
426
AIR SEPARATION
420
AIR
418
O2
424
AIR COMPRESSOR
422
428
414
HEATER
412
H.C. FEED
410
H.C. COMPRESSOR
478

Fig.7